# EUROPEAN PATENT APPLICATION

(11) **EP 4 583 425 A1**
(43) Date of publication of application: **09.07.2025**
(21) Application number: 23867267.9
(22) Date of filing: 04.09.2023
(51) Int. Cl.: H04B 7/185

(54) **SATELLITE COMMUNICATION METHOD AND APPARATUS**

(30) Priority: 23.09.2022 CN 202211163810
(71) Applicant: Huawei Technologies Co., Ltd., Shenzhen, Guangdong 518129 (CN)
(72) Inventor: ZHAO, Feiran, Shenzhen, Guangdong 518129 (CN); CHEN, Ying, Shenzhen, Guangdong 518129 (CN); QIAO, Yunfei, Shenzhen, Guangdong 518129 (CN); ZHANG, Jiayin, Shenzhen, Guangdong 518129 (CN)
(74) Representative: Grünecker Patent- und Rechtsanwälte PartG mbB
(86) International application number: PCT/CN2023/116681
(87) International publication number: WO 2024/060976

(57) **Abstract**

A satellite communication method and an apparatus are provided. The method includes: A network device sends a broadcast message, and correspondingly, a terminal device receives the broadcast message, where the broadcast message includes information indicating a number x of repetitions, and x is a positive integer. Then, the terminal device sends a feedback message for a downlink message in a random access procedure based on the terminal device, where a number y of repetitions for sending the feedback message is determined based on x, and y is a positive integer. In this way, a case in which the terminal device fails to complete initial access can be effectively improved.

## Description

This application claims priority to Chinese Patent Application No. 202211163810.X, filed with the China National Intellectual Property Administration on September 23, 2022 and entitled "SATELLITE COMMUNICATION METHOD AND APPARATUS," which is incorporated herein by reference in its entirety.

### TECHNICAL FIELD

This application relates to the field of communication technologies, and in particular, to a satellite communication method and an apparatus.

### BACKGROUND

With development and evolution of a 5th generation (5th generation, 5G) communication technology, requirements of various application scenarios such as enhanced mobile broadband (enhanced mobile broadband, eMBB), massive machine-type communication (massive machine-type communication, mMTC), and ultra-reliable low-latency communication (ultra-reliable low-latency communication, uRLLC) gradually penetrate into various layers of a terrestrial network (terrestrial network, TN). However, the vision of connectivity of everything is still limited by some special communication scenarios. For example, a conventional terrestrial base station manner cannot provide network coverage for areas such as deserts, forests, and oceans or high-speed moving vehicles such as airplanes and high-speed railways due to cost limitations or physical conditions. Therefore, a non-terrestrial network (non-terrestrial network, NTN) (which may also be referred to as a non-terrestrial network) technology in the 5G network emerges. Compared with the conventional terrestrial communication network, the NTN uses typical communication devices such as satellites and high-altitude platform stations (high-altitude platforms, HAPS) for network deployment technologies, to implement real global network coverage. Therefore, advantages and development strategy importance of the NTN are self-evident. A satellite communication system and 5G are integrated with mutual complementarity, to form a space-air-ground-sea integrated communication network with seamless global coverage, so as to meet various ubiquitous service requirements of users. This is an important direction of communication development in the future.

However, there are still occurrences in which terminal devices in the NTN fail to complete initial access.

### SUMMARY

Embodiments of this application provide a satellite communication method and an apparatus, to effectively improve a case in which a terminal device cannot complete initial access.

According to a first aspect, an embodiment of this application provides a satellite communication method. The method includes: receiving a broadcast message, where the broadcast message includes information indicating a number x of repetitions, and x is a positive integer; and sending a feedback message for a downlink message in a random access procedure based on the broadcast message, where a number y of repetitions for sending the feedback message is determined based on x, and y is a positive integer.

The downlink message (including a downlink message on a physical random access channel (physical random access channel, PRACH)) in the random access procedure includes at least one of a message (message, Msg) 2 and a Msg4 in a four-step random access procedure, or a MsgB in a two-step random access procedure. In this embodiment of this application, the number of repetitions may be understood as a number of times for sending the feedback message. For example, if y=1, it indicates that the number of repetitions for sending the feedback message is 1, that is, a total number of times for sending the feedback message is 1. For another example, if y=2, it indicates that the number of repetitions for sending the feedback message is 2, that is, a total number of times for sending the feedback message is 2. Optionally, if it is understood that the feedback message is not repeatedly sent when the number of times for sending the feedback message is equal to 1, a value of y in this case is different from a value of y described in embodiments of this application. For example, in this case, if the number of times for sending the feedback message is 1, y=0; or if the number of times for sending the feedback message is 2, y=1. Examples are not enumerated.

In this embodiment of this application, the number y of repetitions for sending the feedback message by the terminal device is determined based on the number x of repetitions indicated by the broadcast message. For example, if y is equal to 1, it indicates that the number of repetitions of the feedback message is 1, and the terminal device may learn that the terminal device does not need to perform coverage enhancement, and sending the feedback message once is sufficient for a network device to receive the feedback message (which may also be understood as that link quality is good), so that the terminal device can successfully complete initial access. For another example, if y is greater than or equal to 2, it indicates that the number of repetitions of the feedback message is greater than or equal to 2, and the terminal device may learn that the terminal device needs to repeatedly send the feedback message for coverage enhancement, to ensure that a network device can receive the feedback message, so that the terminal device can successfully complete initial access. According to this embodiment of this application, it can be effectively ensured that the network device can correctly receive the feedback message sent by the terminal device, to ensure that the network device can determine, based on the feedback message, that the terminal device successfully completes random access. Optionally, in this embodiment of this application, for a terminal device at a margin of a satellite cell or a terminal device with a communication elevation angle less than a threshold, a case in which the terminal device cannot complete initial access can be effectively improved, an access delay of the terminal device at the margin of the cell can be reduced, and communication efficiency can be improved.

In a possible implementation, the broadcast message is a system information block (system information block, SIB) 1 or SIB 19.

When the broadcast message is the SIB 1, if both a terminal device in a terrestrial cell and a terminal device in a satellite cell need to perform coverage enhancement, coverage enhancement may be performed based on the SIB1 regardless of the terrestrial cell, the satellite cell, or a cell in a satellite-terrestrial fusion scenario. Optionally, the information that is in the SIB1 and that indicates the number x of repetitions may correspond to the terminal device in the satellite cell or a terminal device in the satellite-terrestrial fusion scenario. In this case, initial access efficiency of the terminal device in the satellite cell or the fusion cell can be effectively improved, to ensure that the network device can determine, based on the feedback message, that the terminal device successfully completes random access, thereby improving communication efficiency.

Generally, the terminal device in the satellite cell needs to obtain ephemeris information based on the SIB19. Therefore, when the broadcast message is the SIB19, whether the terminal device in the satellite cell performs coverage enhancement can be distinguished from whether the terminal device in the terrestrial cell performs coverage enhancement. Based on the SIB19, it can be effectively ensured that the terminal device in the satellite cell can determine, based on x in the SIB19, the number y of repetitions for sending the feedback message. Therefore, it is effectively ensured that the terminal device in the satellite cell can perform coverage enhancement based on x in the SIB19, and it is ensured that the terminal device can successfully complete initial access. When the broadcast message is the SIB19, the terminal device in the terrestrial cell does not need to decode the SIB19, thereby reducing complexity of the terminal device in the terrestrial cell.

In a possible implementation, the broadcast message is a SIB19, and that the broadcast message includes information indicating a number x of repetitions includes: The SIB19 implicitly indicates that x is a preset number z1 of repetitions.

In this embodiment of this application, the terminal device that receives the SIB19 may determine, based on information that the terminal device receives the SIB19, that the number y of repetitions for sending the feedback message is determined based on z1 when the terminal device performs coverage enhancement. Therefore, without introducing additional signaling overheads, it can be ensured that the terminal device learns of the number of repetitions for sending the feedback message by the terminal device, so that the terminal device can perform coverage enhancement based on y (for example, y is greater than or equal to 2). Optionally, when x is the preset number z1 of repetitions, y may be equal to z1, or there is another relationship between y and z1. This is not limited in embodiments of this application.

In a possible implementation, z1=2, 4, 8, 10, or 12.

In this embodiment of this application, z1 is preset, so that the terminal device in the satellite cell can determine y based on z1 after obtaining the SIB19. Therefore, no additional signaling overheads are introduced, and it is further ensured that the terminal device in the satellite cell can effectively complete initial access. It may be understood that a value of z1 may be specified in a standard, and is set on the terminal device during factory setting of the terminal device. Alternatively, a value of z1 may be configured by the network device. For example, the network device configures the value of z1 based on the SIB1. This is not limited in embodiments of this application.

In a possible implementation, y=x.

In this embodiment of this application, when y=x, after receiving the broadcast message, the terminal device may determine y based on the information that is included in the broadcast message and that indicates x. This manner is not only simple, but also ensures that the terminal device can complete initial access.

In a possible implementation, x includes a number of repetitions of a Msg3 or a number of repetitions of a Msg1.

In this embodiment of this application, the terminal device may determine the number of repetitions of the feedback message based on the number of repetitions of the Msg3 or Msg1, to implicitly enable repetition of the feedback message. No additional signaling overheads are introduced, y is indicated, and it is effectively ensured that the terminal device can complete initial access. For example, when y is greater than or equal to 2, performance of a PUCCH for sending the feedback message can be effectively enhanced, thereby achieving coverage enhancement.

In a possible implementation, when x is greater than or equal to a first threshold, y is equal to a preset number z2 of repetitions; or when x is less than a first threshold, y=1.

In this embodiment of this application, z2 is preset, so that the terminal device can obtain y based on the number x of repetitions of the Msg3 or Msg1. Therefore, no additional signaling overheads are introduced, and it is further ensured that the terminal device in the satellite cell can effectively complete initial access. It may be understood that a value of z2 may be specified in a standard, and is set on the terminal device during factory setting of the terminal device. Alternatively, a value of z2 may be configured by the network device. For example, the network device configures the value of z2 based on the SIB 1. This is not limited in embodiments of this application.

In a possible implementation, the first threshold is equal to 2 or 8.

When the first threshold is equal to 2, it indicates that the number of repetitions of the Msg1 or Msg3 is greater than or equal to 2, and the terminal device needs to ensure, by using a coverage enhancement technology, that the network device can successfully obtain the Msg1 or Msg3 (which may also indicate that link quality is insufficient to ensure that the network device can receive the uplink message by sending the uplink message by the terminal device once). Therefore, to ensure that the network device successfully receives the feedback message, the terminal device needs to repeatedly send the feedback message to achieve coverage enhancement, so as to ensure that the terminal device can successfully complete initial access, and reduce an access delay of the terminal device.

When the first threshold is equal to 8, it indicates that the number of repetitions of the Msg1 or Msg3 reaches a specific degree, and the terminal device sends the feedback message by using a coverage enhancement technology, to ensure that the network device can successfully receive the feedback message.

In a possible implementation, z2=2, 4, 8, 10, or 12.

In a possible implementation, the broadcast message further includes information indicating that a terminal device supports inter-slot frequency hopping.

In this embodiment of this application, the broadcast message further includes the information indicating that the terminal device supports inter-slot frequency hopping, so that it can be further ensured that the network device can successfully receive the feedback message, and coding performance of the network device can be effectively improved through coverage enhancement.

In a possible implementation, the broadcast message further includes information about a first-hop physical resource block (physical resource block, PRB) and information about a second-hop PRB.

In a possible implementation, the broadcast message further includes a frequency hopping interval. The frequency hopping interval is an interval between the first-hop PRB and the second-hop PRB.

In a possible implementation, the broadcast message further includes information about de-modulation reference signal (de-modulation reference signal, DMRS) bundling.

In this embodiment of this application, the broadcast message further includes the information used for DMRS bundling, so that it can be further ensured that the network device can successfully receive the feedback message, and coding performance of the network device can be effectively improved through coverage enhancement.

In a possible implementation, the information about the DMRS bundling includes at least one of the following: information about that the terminal device supports j oint channel estimation (joint channel estimation, JCE), a JCE window length, and a frequency hopping time window.

According to a second aspect, an embodiment of this application provides a satellite communication method. The method includes: obtaining a broadcast message, where the broadcast message includes information indicating a number x of repetitions, x corresponds to a number y of repetitions of a feedback message for a downlink message in a random access procedure, and both x and y are positive integers; and sending the broadcast message.

In a possible implementation, the broadcast message is a system information block SIB1 or SIB19.

In a possible implementation, the broadcast message is a SIB19, and that the broadcast message includes information indicating a number x of repetitions includes: The SIB19 implicitly indicates that x is a preset number z1 of repetitions.

In a possible implementation, z1=2, 4, 8, 10, or 12.

In a possible implementation, y=x.

In a possible implementation, x includes a number of repetitions of a message Msg3 or a number of repetitions of a Msg1.

In a possible implementation, when x is greater than or equal to a first threshold, y is equal to a preset number z2 of repetitions; or when x is less than a first threshold, y=1.

In a possible implementation, the first threshold is equal to 2 or 8.

In a possible implementation, z2=2, 4, 8, 10, or 12.

In a possible implementation, the broadcast message further includes information indicating that a terminal device supports inter-slot frequency hopping.

In a possible implementation, the broadcast message further includes information about a first-hop physical resource block (physical resource block, PRB) and information about a second-hop PRB.

In a possible implementation, the broadcast message further includes a frequency hopping interval.

In a possible implementation, the broadcast message further includes information about de-modulation reference signal DMRS bundling.

In a possible implementation, the information about the DMRS bundling includes at least one of the following: information about that the terminal device supports joint channel estimation JCE, a JCE window length, and a frequency hopping time window.

According to a third aspect, an embodiment of this application provides a communication apparatus, configured to perform the method according to any one of the first aspect or the possible implementations of the first aspect. The communication apparatus includes units that perform the method according to any one of the first aspect or the possible implementations of the first aspect.

For example, the communication apparatus may include a terminal device or a chip, and the chip may be used in the terminal device.

According to a fourth aspect, an embodiment of this application provides a communication apparatus, configured to perform the method according to any one of the second aspect or the possible implementations of the second aspect. The communication apparatus includes units that perform the method according to any one of the second aspect or the possible implementations of the second aspect.

For example, the communication apparatus may include a network device or a chip, and the chip may be used in the network device.

In the third aspect or the fourth aspect, the communication apparatus may include a transceiver unit and a processing unit. For specific descriptions of the transceiver unit and the processing unit, refer to apparatus embodiments described below.

According to a fifth aspect, an embodiment of this application provides a communication apparatus. The communication apparatus includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

In a possible implementation, the memory is located outside the communication apparatus. In a possible implementation, the memory is located inside the communication apparatus.

In this embodiment of this application, the processor and the memory may alternatively be integrated into one device, that is, the processor and the memory may alternatively be integrated together.

In a possible implementation, the communication apparatus further includes a transceiver. The transceiver is configured to receive a signal or send a signal. For example, the transceiver may be further configured to receive a broadcast message or the like. For example, the transceiver may be further configured to send a feedback message for a downlink message in a random access procedure, or the like.

According to a sixth aspect, an embodiment of this application provides a communication apparatus. The communication apparatus includes a processor, configured to perform the method according to any one of the second aspect or the possible implementations of the second aspect. Alternatively, the processor is configured to execute a program stored in a memory. When the program is executed, the method according to any one of the second aspect or the possible implementations of the second aspect is performed.

In a possible implementation, the memory is located outside the communication apparatus.

In a possible implementation, the memory is located inside the communication apparatus.

In this embodiment of this application, the processor and the memory may alternatively be integrated into one device, that is, the processor and the memory may alternatively be integrated together.

In a possible implementation, the communication apparatus further includes a transceiver. The transceiver is configured to receive a signal or send a signal. For example, the transceiver may be configured to send a broadcast message or the like. For example, the transceiver may be further configured to receive a feedback message for a downlink message in a random access procedure, or the like.

According to a seventh aspect, an embodiment of this application provides a communication apparatus. The communication apparatus includes a logic circuit and an interface, and the logic circuit is coupled to the interface. The interface is configured to input a broadcast message, where the broadcast message includes information indicating a number x of repetitions, and x is a positive integer. The logic circuit is configured to output a feedback message for a downlink message in a random access procedure based on the broadcast message, where a number y of repetitions for sending the feedback message is determined based on x, and y is a positive integer.

It may be understood that for descriptions of the broadcast message, x, and y, refer to the first aspect.

According to an eighth aspect, an embodiment of this application provides a communication apparatus. The communication apparatus includes a logic circuit and an interface, and the logic circuit is coupled to the interface. The logic circuit is configured to obtain a broadcast message, where the broadcast message includes information indicating a number x of repetitions, x corresponds to a number y of repetitions of a feedback message for a downlink message in a random access procedure, and both x and y are positive integers; and the interface is configured to output the broadcast message.

It may be understood that for descriptions of the broadcast message, x, and y, refer to the second aspect.

According to a ninth aspect, an embodiment of this application provides a computer-readable storage medium. The computer-readable storage medium is configured to store a computer program, and when the computer program is run on a computer, the method according to any one of the first aspect or the possible implementations of the first aspect is performed.

According to a tenth aspect, an embodiment of this application provides a computer-readable storage medium. The computer-readable storage medium is configured to store a computer program, and when the computer program is run on a computer, the method according to any one of the second aspect or the possible implementations of the second aspect is performed.

According to an eleventh aspect, an embodiment of this application provides a computer program product. The computer program product includes a computer program or computer code, and when the computer program or computer code is run on a computer, the method according to any one of the first aspect or the possible implementations of the first aspect is performed.

According to a twelfth aspect, an embodiment of this application provides a computer program product. The computer program product includes a computer program or computer code, and when the computer program or computer code is run on a computer, the method according to any one of the second aspect or the possible implementations of the second aspect is performed.

According to a thirteenth aspect, an embodiment of this application provides a computer program. When the computer program is run on a computer, the method according to any one of the first aspect or the possible implementations of the first aspect is performed.

According to a fourteenth aspect, an embodiment of this application provides a computer program. When the computer program is run on a computer, the method according to any one of the second aspect or the possible implementations of the second aspect is performed.

According to a fifteenth aspect, an embodiment of this application provides a wireless communication system. The wireless communication system includes a terminal device and a network device, the terminal device is configured to perform the method according to any one of the first aspect or the possible implementations of the first aspect, and the network device is configured to perform the method according to any one of the second aspect or the possible implementations of the second aspect.

### BRIEF DESCRIPTION OF DRAWINGS

FIG. 1 is a diagram of a communication system according to an embodiment of this application;
FIG. 2a is a diagram of a satellite communication system in a transparent transmission scenario according to an embodiment of this application;
FIG. 2b is a diagram of a satellite communication system in a regeneration scenario according to an embodiment of this application;
FIG. 2c is a diagram of a satellite communication system in a regeneration scenario according to an embodiment of this application;
FIG. 3 is a schematic flowchart of a satellite communication method according to an embodiment of this application;
FIG. 4 is a diagram of a simulation result according to an embodiment of this application;
FIG. 5 is a diagram of a simulation result according to an embodiment of this application;
FIG. 6a is a diagram of a simulation result according to an embodiment of this application;
FIG. 6b is a diagram of a simulation result according to an embodiment of this application;
FIG. 7 is a diagram of a structure of a communication apparatus according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

To make the objectives, technical solutions, and advantages of this application clearer, this application is further described below with reference to the accompanying drawings.

Terms such as "first" and "second" in the specification, claims, and accompanying drawings of this application are merely used to distinguish between different objects, but are not used to describe a specific order. In addition, terms such as "include" and "have" and any other variations thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

An "embodiment" mentioned in the specification indicates that a particular feature, structure, or characteristic described with reference to this embodiment may be included in at least one embodiment of this application. The phrase described in various locations in the specification may not necessarily refer to a same embodiment, and is not an independent or optional embodiment exclusive from another embodiment. It may be understood explicitly and implicitly by a person skilled in the art that an embodiment described herein may be combined with another embodiment.

In this application, "at least one (item)" means one or more, "a plurality of" means two or more, "at least two (items)" means two or three or more, and "and/or" is used to describe an association relationship between associated objects, and indicates that three relationships may exist. For example, "A and/or B" may indicate the following three cases: Only A exists, only B exists, and both A and B exist, where A and B may be singular or plural. "Or" indicates that two relationships may exist, for example, only A exists and only B exists. When A and B are not mutually exclusive, it may indicate that three relationships exist, for example, only A exists, only B exists, and both A and B exist. A character "/" generally indicates an "or" relationship between the associated objects. "At least one of the following items (pieces)" or a similar expression thereof means any combination of these items. For example, at least one of a, b, or c may indicate: a, b, c, "a and b", "a and c", "b and c", or "a and b and c".

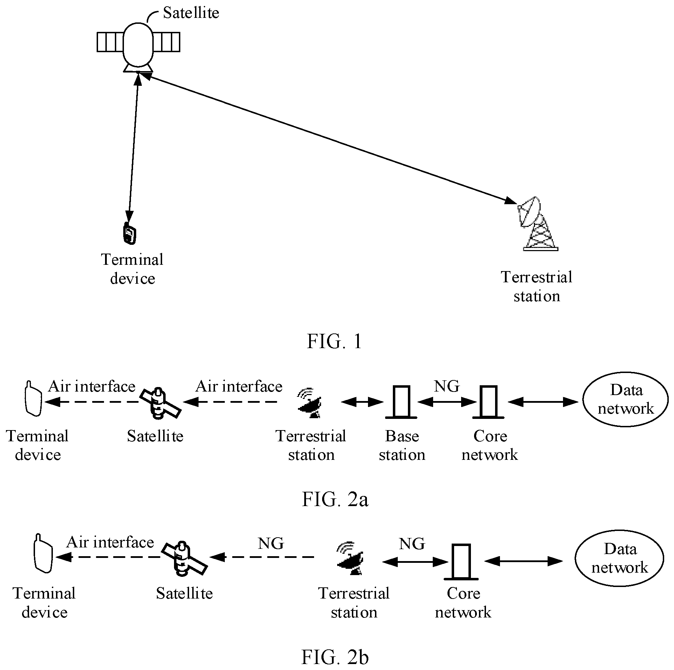

A method provided in embodiments of this application may be applied to an NTN communication system, a communication system that integrates satellite communication and a 5G technology, or the like. As shown in FIG. 1, the communication system may include a terminal device, a satellite (including a satellite base station), and a terrestrial station (which may also be referred to as a gateway or a gateway station) (gateway). It may be understood that FIG. 1 shows only one satellite and one terrestrial station. In actual use, more satellites and/or more terrestrial stations may be deployed as required. Each satellite may provide a service for one or more terminal devices, each satellite may correspond to one or more terrestrial stations, each terrestrial station may correspond to one or more satellites, or the like. This is not specifically limited in embodiments of this application.

The terminal device in embodiments of this application is an apparatus having a wireless transceiver function. The terminal device may communicate with an access network device (or referred to as an access device) in a radio access network (radio access network, RAN). The terminal device may also be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor or outdoor terminal device, and a handheld or vehicle-mounted terminal device; or may be deployed on water (for example, on a ship). In a possible implementation, the terminal device may be a handheld terminal, a vehicle-mounted terminal, a wearable terminal, a sensor, a terminal in the internet of things, a terminal in the internet of vehicles, an uncrewed aerial vehicle, a terminal device in any form in a 5G network or a future network, or the like that has a wireless communication function. This is not limited in embodiments of this application.

Optionally, the terminal devices described in embodiments of this application may communicate with each other through device-to-device (device-to-device, D2D), machine-to-machine (machine-to-machine, M2M), or the like. Optionally, the terminal device described in embodiments of this application may be a device in the internet of things (internet of things, IoT). This IoT network may include, for example, the internet of vehicles. Communication modes in an internet of vehicles system are collectively referred to as vehicle to X (vehicle to X, V2X, where X may represent everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication. It may be understood that the terminal device described in embodiments of this application may include a vehicle (for example, a car) in the internet of vehicles, and may further include a vehicle-mounted device, a vehicle-mounted terminal, or the like in the internet of vehicles. A specific form of the terminal device used in the internet of vehicles is not limited in embodiments of this application.

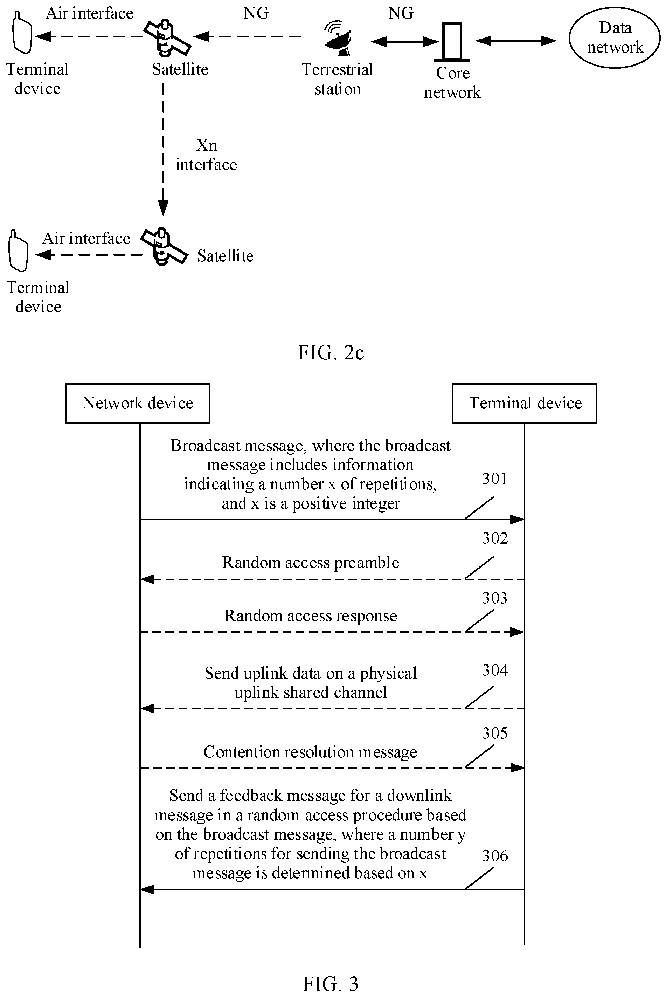

The terrestrial station in embodiments of this application may be configured to connect a satellite to a base station, or connect a satellite to a core network. The satellite in embodiments of this application may provide a radio access service for a terminal device, schedule a radio resource to an access terminal device, and provide a reliable radio transmission protocol, a data encryption protocol, and the like. The satellite may use an artificial earth satellite, a high-altitude aircraft, and the like as base stations for wireless communication, for example, an evolved NodeB (evolved NodeB, eNB) and a next generation NodeB (next generation NodeB, gNB). Alternatively, the satellite may serve as a relay of these base stations, and transparently transmit signals of these base stations to the terminal device. Therefore, in some implementations of embodiments of this application, for example, in a satellite transparent transmission scenario, a network device may be a terrestrial base station. Optionally, FIG. 2a is a diagram of a satellite communication system in a transparent transmission scenario according to an embodiment of this application. For example, a terminal device may access a network through air interfaces (where the air interfaces may be various types of air interfaces, for example, 5G air interfaces), and a network device may be deployed on a terrestrial base station. A satellite is connected to a terrestrial station over a radio link. The terrestrial station and the terrestrial base station are connected to a core network in a wired or wireless manner. There may be a radio link between satellites. In the system shown in FIG. 2a, the satellites may have a transparent transmission and forwarding function (that is, corresponding network devices are deployed on the ground), and transparent transmission and forwarding may be performed between the satellites. In some other implementations of embodiments of this application, for example, in a satellite regeneration scenario, a network device may be the satellite shown in FIG. 1. Optionally, FIG. 2b is a diagram of a satellite communication system in a regeneration scenario according to an embodiment of this application. For example, a terminal device may access a network through air interfaces (where the air interfaces may be various types of air interfaces, for example, 5G air interfaces), and network devices may be deployed on satellites (for example, in a regeneration mode of the satellites). For example, base stations or some functions of the base stations are deployed on the satellites, and signaling exchange and user data transmission between the base stations may be completed between the satellites, as shown in FIG. 2c.

For example, network elements and interfaces between the network elements in FIG. 2a to FIG. 2c may be described as follows.

The terminal device may access a satellite network through an air interface and initiate services such as call and internet access. The base station may be configured to provide a radio access service, schedule a radio resource to an access terminal device, and provide a reliable radio transmission protocol, a data encryption protocol, and the like. The terrestrial station may be configured to be responsible for forwarding signaling and service data between the satellite and the core network. The core network may be used for user access control, mobility management, session management, user security authentication, charging, or the like. The core network may include a plurality of functional units, for example, functional entities including a control plane and a data plane. For example, the core network shown in FIG. 2a to FIG. 2c may include an access and mobility management function (access and mobility management function, AMF), a session management function (session management function, SMF), a user plane function (user plane function, UPF), and the like. For example, the AMF may be configured to be responsible for user access management, security authentication, mobility management, and the like. The UPF may be configured to be responsible for managing user plane data transmission, traffic statistics collection, and the like. The air interface shown in FIG. 2a to FIG. 2c may be understood as a radio link between a terminal and the base station, or a radio link between the satellite and the terrestrial station. The Xn interface may be understood as an interface between the base stations, and is mainly configured to exchange signaling such as handover signaling. The NG interface may be used as an interface between the base station and the core network, and is configured to exchange signaling such as non-access stratum (non-access stratum, NAS) signaling of the core network and service data of a user.

It may be understood that, in systems using different radio access technologies, names of devices having a base station function may be different, and are not shown one by one in embodiments of this application.

Optionally, the satellite may be a geostationary earth orbit (geostationary earth orbit, GEO) satellite, a medium earth orbit (medium earth orbit, MEO) satellite or a low earth orbit (low earth orbit, LEO) satellite in a non-geostationary earth orbit (none-geostationary earth orbit, NGEO), a high-altitude platform station (high-altitude platform station, HAPS), or the like. A specific type of the satellite is not limited in embodiments of this application.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of a new service scenario, the technical solutions provided in embodiments of this application are also applicable to similar technical problems.

For a user in the NTN, currently, there is still a case in which some users cannot complete initial access. This greatly increases an access delay of the user, and affects communication experience. In a process of analyzing a reason why the users cannot complete initial access, it is found that these users have a signal-to-noise ratio (signal-to-noise ratio, SNR) gap (SNR gap). Due to existence of the SNR gap, there is a case in which a user, especially a user at a margin of a cell or a user with a small communication elevation angle (for example, the communication elevation angle is less than a threshold) cannot complete initial access. It may be understood that, for ease of description, the user and the terminal device in embodiments of this application may be equivalent, but should not be understood as a limitation on embodiments of this application.

Link budget simulation is performed based on a non-line of sight (non-line of sight, NLOS) scenario and a line of sight (line of sight, LOS) scenario in the NTN and a currently existing cell-specific common physical uplink control channel (physical uplink control channel, PUCCH) resource configuration, to obtain a difference between a coding threshold and a link budget. The coding threshold may include a signal-to-noise ratio (signal-to-noise ratio, SNR) coding threshold (which may also be referred to as a decoding threshold), the link budget may include a carrier-to-noise ratio (carrier-to-noise ratio, CNR), and the difference may be referred to as an SNR gap (SNR gap). Based on the configuration of the PUCCH resource, in an NTN scenario, a PUCCH for sending a feedback message generates an SNR gap of 1.8 dB to 6 dB (according to 3GPP RAN1#110 Chairman's Notes), and thus coding cannot be performed. Therefore, in embodiments of this application, it is considered that coverage enhancement is performed on the PUCCH for sending the feedback message. For example, link coverage enhancement of 1.8 dB to 6 dB may be added to the PUCCH for sending the feedback message. Optionally, for a LOS channel scenario with a low earth orbit (low earth orbit, LEO)-1200 satellite parameter set, coverage enhancement can effectively reduce an SNR gap, or even eliminate an SNR gap. Coverage enhancement is performed on the PUCCH for sending the feedback message, so that a coding threshold on a network side can be effectively reduced. The coding threshold is reduced, so that a reduced coding threshold may be less than or equal to the CNR, thereby ensuring that the network side can perform decoding successfully.

In view of this, embodiments of this application provide a satellite communication method and an apparatus, to effectively implement link coverage enhancement, so that a terminal device can successfully complete initial access, and an access delay is reduced as much as possible. For example, a number of transmissions for sending a feedback message by the terminal device is increased, so that a success rate of sending the feedback message by the terminal device can be increased, and an access delay caused by an insufficient link budget (which may also be understood as an SNR gap caused by an insufficient link budget) can be reduced. Optionally, embodiments of this application provide a signaling configuration manner in which repetition, inter-slot frequency hopping, and DMRS bundling are enabled for a cell-specific common PUCCH resource in a SIB. For NTN UE in a satellite cell, enhanced transmission (including frequency hopping, repetition, JCE, and the like) of a PUCCH for sending a feedback message may be enabled, to increase a success rate of sending the feedback message by the UE, and avoid an access delay caused by an insufficient link budget.

It may be understood that the feedback message described in embodiments of this application may be a feedback message for a downlink message in a random access procedure. The downlink message in the random access procedure includes at least one of a Msg2 and a Msg4 in a four-step random access procedure, or includes a MsgB in a two-step random access procedure. For ease of description, the following describes the method provided in embodiments of this application by using an example in which a feedback message is a hybrid automatic repeat request (hybrid automatic repeat request, HARQ) acknowledgement (acknowledgement, ACK) (namely, HARQ-ACK) for a Msg4.

FIG. 3 is a schematic flowchart of the satellite communication method according to an embodiment of this application. For a terminal device and a network device in the method, refer to at least one of FIG. 1, FIG. 2a, FIG. 2b, or FIG. 2c. As shown in FIG. 3, the method includes the following steps.

301: The network device sends a broadcast message. Correspondingly, the terminal device receives the broadcast message. The broadcast message includes information indicating a number x of repetitions, and x is a positive integer.

In this embodiment of this application, x may correspond to a number y of repetitions of a feedback message for a downlink message in a random access procedure, and y is a positive integer. For example, y may be equal to 1, or y is greater than or equal to 2, for example, y=2, y=4, y=6, y=8, y=10, or y=12. Examples are not enumerated. It may be understood that an example in which y is an even number is used herein. For example, y may alternatively be an odd number, for example, y=3, y=5, y=7, y=9, or y=11. Examples are not enumerated.

In a possible implementation, the broadcast message may be a SIB1. When the broadcast message is the SIB1, if both a terminal device in a terrestrial cell and a terminal device in a satellite cell need to perform coverage enhancement, coverage enhancement may be performed based on the SIB1 regardless of the terrestrial cell, the satellite cell, or a terminal device in a satellite-terrestrial fused scenario. Optionally, the information that is in the SIB1 and that indicates the number x of repetitions may correspond to the terminal device in the satellite cell or the terminal device in the satellite-terrestrial fusion scenario. In this case, initial access efficiency of the terminal device in the satellite cell or the fusion cell can be effectively improved, to ensure that the network device can determine, based on the feedback message, that the terminal device successfully completes random access, thereby improving communication efficiency.

In another possible implementation, the broadcast message may be a SIB19. When the broadcast message is the SIB19, whether a terminal device in a satellite cell performs coverage enhancement can be distinguished from whether a terminal device in a terrestrial cell performs coverage enhancement. Based on the SIB19, it can be effectively ensured that the terminal device in the satellite cell can determine, based on x in the SIB19, the number y of repetitions for sending the feedback message. Therefore, it is effectively ensured that the terminal device in the satellite cell can perform coverage enhancement based on x in the SIB19, and it is ensured that the terminal device can successfully complete initial access.

When the broadcast message is the SIB19, the terminal device in the terrestrial cell does not need to decode the SIB19, thereby reducing complexity of the terminal device in the terrestrial cell. When the broadcast message is the SIB19, that the broadcast message includes information indicating a number x of repetitions includes: The SIB19 implicitly indicates that x is a preset number z1 of repetitions. The terminal device that receives the SIB19 may determine, based on information that the terminal device receives the SIB19, that the number y of repetitions for sending the feedback message is determined based on z1 when the terminal device performs coverage enhancement. Therefore, without introducing additional signaling overheads, it can be ensured that the terminal device learns of the number of repetitions for sending the feedback message by the terminal device, so that the terminal device can perform coverage enhancement based on y (for example, y is greater than or equal to 2). In this embodiment of this application, z1 may be a positive integer. For example, z1=2, 4, 8, 10, or 12. It may be understood that the values of z1 described herein are merely examples. For example, z1 may be an odd number. Examples are not enumerated herein. It may be understood that z1 may be a preset number of repetitions, or z1 may be one number of repetitions determined by the terminal device from a plurality of preset numbers of repetitions. When z1 is one of the plurality of preset numbers of repetitions, the terminal device may randomly select one number of repetitions from the plurality of preset numbers of repetitions. Alternatively, the terminal device may determine one number of repetitions from the plurality of preset numbers of repetitions based on a number of repetitions of a Msg1 or a number of repetitions of a Msg3 (if the SIB1 includes a number of repetitions of a Msg1 or Msg3). Alternatively, the terminal device may determine one number of repetitions from the plurality of preset numbers of repetitions based on a compromise between a resource and performance. The resource described herein may be understood as at least one of a time domain resource or a frequency domain resource for sending a HARQ-ACK, and the performance may be understood as coding performance, an SNR, or the like of the network device. In this embodiment of this application, z1 is preset, so that the terminal device in the satellite cell can determine y based on z1 after obtaining the SIB19. Therefore, no additional signaling overheads are introduced, and it is further ensured that the terminal device in the satellite cell can effectively complete initial access. It may be understood that a value of z1 may be specified in a standard, and is set on the terminal device during factory setting of the terminal device. Alternatively, a value of z1 may be configured by the network device. For example, the network device configures the value of z1 based on the SIB1. This is not limited in embodiments of this application. Optionally, when x is the preset number z1 of repetitions, y may be equal to z1. Optionally, when x is the preset number z1 of repetitions, there may be another correspondence between y and z1. Examples are not enumerated herein.

In a possible implementation, y=x. The manner in which y=x is applicable to a case in which the broadcast message is the SIB1 and a case in which the broadcast message is the SIB19. In this embodiment of this application, when y=x, after receiving the broadcast message, the terminal device may determine y based on the information that is included in the broadcast message and that indicates x. This manner is not only simple, but also ensures that the terminal device can complete initial access. For example, the broadcast message is the SIB1, the SIB1 may include indication information for enabling repetition, and the number x of repetitions may be a preset number z3 of repetitions. For example, z3 may be equal to 2, 4, 6, 8, 10, or 12. Examples are not enumerated. Optionally, z3 may be an odd number. Examples are not enumerated herein. In this case, y may be equal to z3. Alternatively, there is another correspondence between y and z3. Examples are not enumerated. For another example, the broadcast message is the SIB19, and the terminal device determines, based on the SIB19, that x is the preset number z1 of repetitions. For a relationship between x, z1, and y, refer to the foregoing descriptions. Details are not described herein again.

In another possible implementation, x includes the number of repetitions of the Msg1 or Msg3. The terminal device determines a number of repetitions of the HARQ-ACK based on the number of repetitions of the Msg1 or Msg3. In other words, the number of repetitions of the HARQ-ACK is associated with the number of repetitions of the Msg1, or the number of repetitions of the HARQ-ACK is associated with the number of repetitions of the Msg3. Therefore, repetition of the HARQ-ACK is implicitly enabled; and y is indicated to ensure that the terminal device can complete initial access, for example, when y is greater than or equal to 2, performance of a PUCCH for sending the feedback message can be effectively enhanced, to achieve coverage enhancement. In addition, no additional signaling overheads are introduced, thereby reducing signaling overheads. Generally, the number of repetitions of the Msg1 or Msg3 is included in the SIB1. However, with development of standard technologies, another SIB may also include the number of repetitions of the Msg1 or Msg3. For example, the SIB19 may also include the number of repetitions of the Msg1 or Msg3. This is not limited in embodiments of this application.

In an example, when x is greater than or equal to a first threshold, y is equal to a preset number z2 of repetitions; or when x is less than a first threshold, y=1. Optionally, the first threshold is equal to 2, 4, 6, 8, 10, 12, or the like. It may be understood that the first threshold may be an even number, or may be an odd number. For example, the first threshold may be equal to 3 or 7. Examples are not enumerated herein. It may be understood that a value of z2 may be specified in a standard, and is set on the terminal device during factory setting of the terminal device. Alternatively, a value of z2 may be configured by the network device. For example, the network device configures the value of z2 based on the SIB1. This is not limited in embodiments of this application. Optionally, z2=2, 4, 8, 10, or 12. It may be understood that the values of z2 described herein are merely examples. For example, z2 may be an odd number. Examples are not enumerated herein. Optionally, a value of y in a case in which x is equal to the first threshold may be the same as that in a case in which x is less than the first threshold, that is, y=1. This does not change essence of this application. Another scenario in which differentiation is performed based on a threshold is similar. Therefore, details are not described again.

In another example, when x includes the number of repetitions of the Msg1 or Msg3, y may be equal to x.

In still another example, when x is less than or equal to a third threshold, y may be equal to x; or when x is greater than a third threshold, y may be equal to 8, 10, 12, or the like. For example, the third threshold may be equal to 8, or the third threshold may be equal to 6. Examples are not enumerated herein. When x includes the number of repetitions of Msg1 or Msg3, relationships between x and y are not enumerated in embodiments of this application.

It may be understood that a specific value of y in embodiments of this application may be considered by making a compromise between a time-frequency resource and performance (for example, a performance gain or coding performance). If the performance gain needs to be greatly improved, the value of y may be greater than or equal to 4, the value of y may be greater than or equal to 6, the value of y may be greater than or equal to 8, the value of y may be greater than or equal to 10, the value of y may be greater than or equal to 12, or the like. Examples are not enumerated herein. If a time-frequency resource used to send the HARQ-ACK further needs to be considered while the performance gain is improved, the value of y may be less than or equal to 4, the value of y may be less than or equal to 6, the value of y may be less than or equal to 8, the value of y may be less than or equal to 10, the value of y may be less than or equal to 12, or the like. Examples are not enumerated herein. It may be understood that the values of y described herein are merely examples, and should not be construed as any limitation on embodiments of this application.

In a possible implementation, the broadcast message further includes at least one of the following information: information indicating that a terminal device supports inter-slot frequency hopping, information about a first PRB, information about a second PRB, information about that the terminal device supports JCE, a JCE window length, a frequency hopping interval, and a frequency hopping time window.

In an example, the broadcast message further includes the information indicating that the terminal device supports inter-slot frequency hopping, or the information may also be referred to as information for enabling inter-slot frequency hopping of the terminal device, an enabling switch of inter-slot frequency hopping, or the like. For example, based on the information indicating that the terminal device supports inter-slot frequency hopping, the terminal device may perform inter-slot frequency hopping. Specific locations of a first-hop PRB and a second-hop PRB may be calculated by the terminal device based on a related parameter, or may be configured by the network device based on the broadcast message, or may be determined based on a BWP resource for transmitting the Msg3. This is not limited in embodiments of this application. That the specific locations of the first-hop PRB and the second-hop PRB may be configured by the network device based on the broadcast message may include: The broadcast message includes information about the first-hop PRB and information about the second-hop PRB. That the specific locations of the first-hop PRB and the second-hop PRB may be determined based on the BWP resource for transmitting the Msg3 includes: The frequency hopping interval is determined based on a size of the BWP resource used during transmission of the Msg3. For example, the first-hop PRB is used in an even-numbered slot occupied by a PUCCH for sending the HARQ-ACK, and the second-hop PRB is used in an odd-numbered slot occupied by the PUCCH for sending the HARQ-ACK. The first-hop PRB may be a first PRB in a BWP for the Msg3, and the second-hop PRB may be a second PRB in the BWP for the Msg3. For example, the first PRB may be a PRB with a smallest index (index), and the second PRB may be a PRB with a largest index. Examples are not enumerated herein.

In another example, the broadcast message further includes the information about the first-hop PRB and the information about the second-hop PRB. It may be understood that, when the broadcast message includes the information about the first-hop PRB and the information about the second-hop PRB, it may implicitly indicate that the terminal device supports inter-slot frequency hopping. Optionally, the broadcast message may include the frequency hopping interval, and the frequency hopping interval may be understood as an interval between the first-hop PRB and the second-hop PRB. The terminal device may learn of the interval between the first-hop PRB and the second-hop PRB based on the frequency hopping interval. In this case, the first-hop PRB may be determined by the terminal device, configured by the network device, or the like. This is not limited in embodiments of this application.

In this embodiment of this application, when the terminal device supports repetition sending of the HARQ-ACK, inter-slot frequency hopping is enabled, so that a coverage area can be further enhanced, and a performance gain can be improved, thereby increasing a probability that the terminal device successfully completes initial access.

In an example, the broadcast message further includes the information about that the terminal device supports JCE, or the information may also be referred to as a JEC enabling switch, a DMRS enabling switch, a DMRS bundling (bundling) enabling switch, or the like. For example, based on the information about that the terminal device supports JCE, the terminal device may use a JCE technology when repeatedly sending the HARQ-ACK. Correspondingly, the network device may perform joint DMRS channel estimation. The JCE window length may be equal to the number of repetitions for sending the HARQ-ACK, less than the number of repetitions for sending the HARQ-ACK, or the like. This is not limited in embodiments of this application. For example, the JCE window length may be defined in a standard or configured by the network device based on the broadcast message. That the JCE window length may be configured by the network device based on the broadcast message includes: The broadcast message further includes the JCE window length.

In another example, the broadcast message further includes the JCE window length. When the broadcast message includes information about the JCE window length, it may implicitly indicate that the terminal device supports JCE. Optionally, the broadcast message may include the frequency hopping time window. The frequency hopping time window may be understood as duration of a first hop or duration of a second hop in a case in which the terminal device performs inter-slot frequency hopping and JCE. Generally, the duration of the first hop may be equal to the duration of the second hop. Optionally, the JCE window length is less than or equal to the frequency hopping time window.

In this embodiment of this application, when the terminal device supports repetition sending of the HARQ-ACK, JCE is enabled, so that a coverage area can be further enhanced, and a performance gain can be improved, thereby increasing a probability that the terminal device successfully completes initial access.

It may be understood that the information described above may be further combined with each other. For example, the broadcast message includes the information indicating x, and may further include the information indicating that the terminal device supports inter-slot frequency hopping and the information about that the terminal device supports JCE. For another example, the broadcast message may include the information indicating x, and may further include the information about the first-hop PRB, the information about the second-hop PRB, and the information about that the terminal device supports JCE. For another example, the broadcast message includes the information indicating x, and may further include the frequency hopping window length and the JCE window length. It may be understood that manners of combining the foregoing information are not enumerated.

For descriptions of the information described above, refer to the following specific implementations. For example, for the information indicating x, refer to Implementation 1 to Implementation 3. For related descriptions of inter-slot frequency hopping, refer to Implementation 4 and Implementation 5. For related descriptions of JCE, refer to Implementation 6.

A specific type of the broadcast message is not limited in embodiments of this application. Any case in which the terminal device can obtain a cell-specific PUCCH resource configuration based on the broadcast message falls within the protection scope of the broadcast message described in embodiments of this application. Generally, before initiating random access, a terminal device needs to obtain a cell-specific PUCCH resource configuration based on a broadcast message. The terminal device may use the PUCCH resource configuration in a random access procedure by obtaining the PUCCH resource configuration. For example, the PUCCH may be used to send the Msg4 HARQ-ACK.

Descriptions about a PUCCH time domain resource are provided as follows:
A cell-specific PUCCH time domain resource may be configured by using a parameter PUCCH common configuration (PUCCH-ConfigCommon) in an information element (information element, IE) common uplink bandwidth part (bandwidth part, BWP) (BWP-UplinkCommon) in the SIB1. For example, a PUCCH common resource (PUCCH-ResourceCommon) in the parameter PUCCH-ConfigCommon may be used to indicate a value in 0 to 15 to the terminal device. Each value in 0 to 15 may indicate a PUCCH format (PUCCH format), a start symbol (first symbol), a number of symbols (number of symbols) in a slot, a PRB offset (PRB offset), and a cyclic shift index (set of initial CS index). The terminal device may determine, by configuring a PUCCH resource by using radio resource control (radio resource control, RRC) signaling, a cell-specific PUCCH resource set (PUCCH resource set) that needs to be used to send an uplink HARQ-ACK. In other words, the terminal device may determine, by using the foregoing signaling, a time domain resource that needs to be used by the terminal device (the UE) to send the PUCCH. It may be understood that for descriptions of the time domain resource of the PUCCH, refer to the specific descriptions in the specification TS 318.213. Details are not described in embodiments of this application.

It may be understood that the IE described in this embodiment of this application may also be understood as an RRC parameter, RRC signaling, a parameter for short, or the like. A specific name of each parameter in the broadcast message is not limited in embodiments of this application.

Descriptions about a PUCCH frequency domain resource are provided as follows:
A cell-specific PUCCH frequency domain resource may be jointly determined based on values of three bits in a PUCCH resource indicator (PUCCH resource indicator, PRI) field in DCI, a location of a PDCCH control channel element (control channel element, CCE), a number of PDCCH CCEs, and the like. Optionally, the terminal device may further calculate the first-hop PRB and the second-hop PRB based on whether the terminal device performs frequency hopping. For descriptions of the first-hop PRB and the second-hop PRB, refer to the following descriptions. Details are not described herein.

It may be understood that the time domain resource and frequency domain resource of the PUCCH described above are merely examples. With development of communication technologies, a manner of determining the time domain resource and frequency domain resource of the PUCCH may change. This is not limited in embodiments of this application. Regardless of how the time domain resource and frequency domain resource of the PUCCH change, any case in which the terminal device may repeatedly send the PUCCH based on the time domain resource of the PUCCH falls within the protection scope of embodiments of this application.

In a possible implementation, before the network device sends the broadcast message, the method shown in FIG. 3 further includes:
The network device obtains the broadcast message.

That the network device obtains the broadcast message may be understood as that the network device generates the broadcast message, or the network device determines the broadcast message.

306: Send a feedback message for a downlink message in a random access procedure based on the broadcast message, where a number y of repetitions for sending the broadcast message is determined based on x. Correspondingly, the network device receives the feedback message.

Optionally, before the terminal device sends the feedback message based on the broadcast message, the terminal device may further determine that the terminal device is located in an NTN. If the terminal device is located in the NTN, the terminal device may enhance coverage by repeatedly sending a HARQ-ACK. For example, the terminal device may determine, based on whether the terminal device needs to decode the SIB 19, whether the terminal device is located in the NTN. If the broadcast message is the SIB19, the terminal device may implicitly determine that the terminal device is located in the NTN. Certainly, because the terminal device in the NTN needs to obtain ephemeris information based on the SIB19, when the terminal device receives the SIB 19, the terminal device may not perform the step of determining that the terminal device is located in the NTN, but determine, based on the SIB19, that the terminal device needs to repeatedly send the feedback message. For example, when the broadcast message is the SIB1, a manner in which the terminal device determines that the terminal device is located in the NTN may include at least one of the following: determining, based on a capability of the terminal device, whether the terminal device is a terminal device in the NTN; or determining, based on an access resource, whether the terminal device is a terminal device in the NTN. The access resource may include an NTN resource, for example, an access frequency band. A method for determining, by the terminal device, that the terminal device is located in the NTN is not limited in embodiments of this application.

Optionally, the information that is included in the broadcast message and that indicates the number x of repetitions corresponds to the terminal device in the NTN. If the information indicating x is specially configured by the network device for the terminal device in the satellite cell, the terminal device may send the feedback message based on the broadcast message, that is, may not perform the step of determining whether the terminal device is located in the NTN.

Generally, a transmission delay between a terminal device and a network device that are in a terrestrial network is far less than a transmission delay between a terminal device and a network device that are in the NTN, and link performance in the terrestrial network is good. Therefore, the terminal device in the terrestrial network may not repeatedly send the feedback message. However, for the terminal device in the NTN, a link budget is poor due to a large transmission delay and a high path loss. Especially, for a terminal device with a higher orbital height and a smaller communication elevation angle, a link budget is poorer. Therefore, the terminal device in the NTN repeatedly sends the feedback message, so that a probability that the terminal device successfully sends the feedback message can be increased, to ensure that the network device can successfully determine that the terminal device has successfully completed initial access, and perform a subsequent scheduling procedure. It may be understood that, that the terminal device repeatedly sends the feedback message may also be understood as that the terminal device repeatedly sends a PUCCH for sending the feedback message. Repeatedly sending the PUCCH can effectively reduce an SNR coding threshold, effectively reduce a probability that the terminal device re-initiates a random access procedure, and reduce an access delay.

In a possible implementation, before step 306, the method shown in FIG. 3 further includes the following steps.

302: The terminal device sends a random access preamble (preamble) to the network device. Correspondingly, the network device receives the random access preamble.

It may be understood that the random access preamble may also be referred to as a Msg1.

303: The network device sends a random access response (random access response, RAR) to the terminal device. Correspondingly, the terminal device receives the RAR.

It may be understood that the RAR may also be referred to as a Msg2. For example, the RAR may include a sequence number of a random access preamble, a timing advance command, uplink resource allocation information, and the like. It may be understood that, if the sequence number of the random access preamble in the RAR is the same as a sequence number of the random access preamble sent by the terminal device, the terminal device may consider that the RAR is an RAR for the terminal device.

304: The terminal device sends uplink data on a physical uplink shared channel (physical uplink shared channel, PUSCH). Correspondingly, the network device receives the uplink data.

For example, the terminal device may send the uplink data based on an uplink resource indicated in the RAR. The uplink data sent by the terminal device on the PUSCH may also be referred to as a Msg3.

305: The network device sends a contention resolution message. Correspondingly, the terminal device receives the contention resolution message.

It may be understood that the contention resolution message may also be referred to as a Msg4. For example, the network device may indicate, by including a user identifier in the contention resolution message, the terminal device that successfully accesses the network device.

It may be understood that step 302 to step 305 are described by using the four-step random access procedure as an example, but should not be construed as any limitation on embodiments of this application.

In this embodiment of this application, the number y of repetitions for sending the feedback message by the terminal device is determined based on the number x of repetitions indicated by the broadcast message. For example, if y is equal to 1, it indicates that the number of repetitions of the feedback message is 1, and the terminal device may learn that the terminal device does not need to perform coverage enhancement, and may ensure, by sending the feedback message once is sufficient for the network device to receive the feedback message (which may also be understood as that link quality is good), so that the terminal device can successfully complete initial access. For another example, if y is greater than or equal to 2, it indicates that the number of repetitions of the feedback message is greater than or equal to 2, and the terminal device may learn that the terminal device needs to repeatedly send the feedback message for coverage enhancement, to ensure that the network device can receive the feedback message, so that the terminal device can successfully complete initial access. Therefore, according to this embodiment of this application, it can be effectively ensured that the network device can correctly receive the feedback message sent by the terminal device, to ensure that the network device can determine, based on the feedback message, that the terminal device successfully completes random access. Optionally, in this embodiment of this application, for a terminal device at a margin of a satellite cell or a terminal device with a communication elevation angle less than a threshold, a case in which the terminal device cannot complete initial access can be effectively improved, an access delay of the terminal device at the margin of the cell can be reduced, and communication efficiency can be improved.

The following describes in detail the broadcast message in step 301.

### Implementation 1

The broadcast message is the SIB 1 message, and the SIB 1 includes the information indicating x.

Generally, before UE initiates random access, the UE may obtain the SIB1 based on a synchronization signal block (synchronization signal block, SSB) delivered by a network device, and decode the SIB1 to obtain downlink synchronization. Therefore, the UE may obtain, based on the SIB1, the information indicating x.

In a possible implementation, the information indicating x may be included in a parameter BWP-UplinkCommon in the SIB1. For example, a new parameter (or referred to as a new field) is added to the parameter BWP-UplinkCommon, and the added new parameter may be used to indicate NTN UE in a cell to use a repetition sending manner when sending a Msg4 HARQ-ACK, or the added new parameter may be used to indicate a number of repetitions when NTN UE in a cell sends a Msg4 HARQ-ACK. It may be understood that the new parameter (or the new field) described herein may be understood as being equivalent to the foregoing information indicating x.

For example, when the parameter BWP-UplinkCommon in the SIB1 includes the new parameter like a number of repetitions of a PUCCH for the Msg4 (NumberofMsg4PUCCH-Repetitions), the UE may learn, based on the new parameter, that when the Msg4 HARQ-ACK is sent, repetition of the HARQ-ACK is enabled or repetition of the PUCCH for sending the HARQ-ACK is enabled. It may be understood that, in this embodiment of this application, descriptions of repeatedly sending the HARQ-ACK by the UE and descriptions of repeatedly sending, by the UE, the PUCCH for sending the HARQ-ACK may be replaced with each other.

Manner 1: The number y of repetitions of the HARQ-ACK may be defined in a standard. For example, the number of repetitions of the HARQ-ACK is set on the terminal device before delivery. Alternatively, y may be equal to the preset number z3 of repetitions.

For example, a format of the new parameter NumberofMsg4PUCCH-Repetitions in the parameter BWP-UplinkCommon may be expressed as follows:

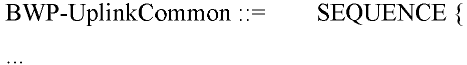

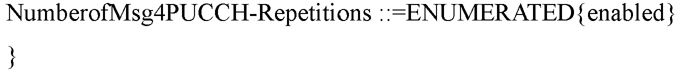

It may be understood that other parameters in the parameter BWP-UplinkCommon are omitted by the ellipsis. Descriptions of the ellipsis are not described in detail in embodiments of this application.

Optionally, a value "enabled" of the new parameter indicates that the terminal device is allowed to repeatedly send the HARQ-ACK, and a value "disabled" of the new parameter indicates that the terminal device is not allowed to repeatedly send the HARQ-ACK. Optionally, if the parameter BWP-UplinkCommon in the SIB1 does not include the new parameter, it indicates that the terminal device is not allowed to repeatedly send the HARQ-ACK. In other words, when transmitting the Msg4 HARQ-ACK, the UE uses a legacy (legacy) PUCCH sending manner, that is, a non-repetition sending manner. For descriptions of a time domain resource used when the UE sends the HARQ-ACK, refer to the method shown in FIG. 3. For example, the HARQ-ACK is sent through a cell-specific common PUCCH resource. Details are not described herein again.

Manner 2: The number of repetitions of the HARQ-ACK may be configured by the network device based on the new parameter NumberofMsg4PUCCH-Repetitions in the parameter BWP-UplinkCommon.

In an example, a format of the new parameter NumberofMsg4PUCCH-Repetitions in the parameter BWP-UplinkCommon may be expressed as follows:

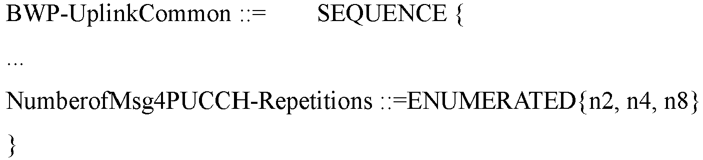

n2 indicates that the number of repetitions of the HARQ-ACK is 2, n4 indicates that the number of repetitions of the HARQ-ACK is 4, and n8 indicates that the number of repetitions of the HARQ-ACK is 8. When the number of repetitions of the HARQ-ACK is configured in the new parameter NumberofMsg4PUCCH-Repetitions in the parameter BWP-UplinkCommon, the terminal device may implicitly learn, based on the new parameter, that the terminal device uses a repetition sending manner when sending the HARQ-ACK.

It may be understood that "NumberofMsg4PUCCH-Repetitions ::=ENUMERATED { n2, n4, n8}" expressed above may be understood as the information indicating x, that is, x may be equal to 2, 4, or 8. Optionally, y may be equal to x.

In another example, a format of the new parameter NumberofMsg4PUCCH-Repetitions in the parameter BWP-UplinkCommon may be expressed as follows:

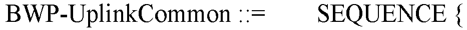

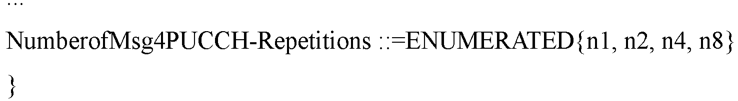

n1 indicates that the number of repetitions of the HARQ-ACK is 1 (which may also be understood as that the HARQ-ACK is not repeatedly sent), n2 indicates that the number of repetitions of the HARQ-ACK is 2, n4 indicates that the number of repetitions of the HARQ-ACK is 4, and n8 indicates that the number of repetitions of the HARQ-ACK is 8. When the number of repetitions of the HARQ-ACK is configured in the new parameter NumberofMsg4PUCCH-Repetitions in the parameter BWP-UplinkCommon, if the number of sending times is 1, the terminal device does not repeatedly send the HARQ-ACK; or if the number of sending times is greater than 1, the terminal device repeatedly sends the HARQ-ACK.

It may be understood that "NumberofMsg4PUCCH-Repetitions ::=ENUMERATED{n1, n2, n4, n8}" expressed above may be understood as the information indicating x, that is, x may be equal to 1, 2, 4, or 8. Optionally, y may be equal to x.

In still another example, a format of the new parameter NumberofMsg4PUCCH-Repetitions in the parameter BWP-UplinkCommon may be expressed as follows:

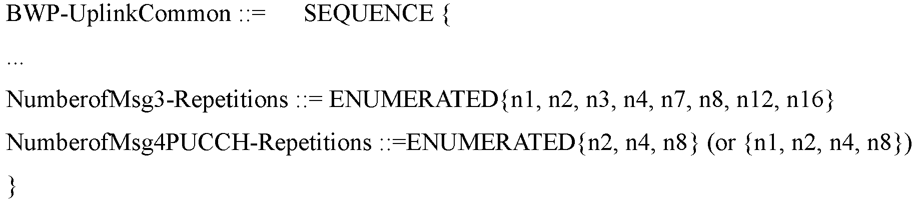

NumberofMsg3-Repetitions indicates a number of repetitions of the Msg3. For descriptions of n1, n2, ..., and n16, refer to the foregoing descriptions of n2 and the like. Details are not described herein again. Optionally, the new parameter may be located after the parameter NumberofMsg3-Repetitions in the parameter BWP-UplinkCommon. Configuration information of the number of repetitions of the HARQ-ACK and configuration information of the number of repetitions of the Msg3 are placed together, so that the terminal device can effectively learn of the number of repetitions of the HARQ-ACK and the number of repetitions of the Msg3.

It may be understood that "NumberofMsg4PUCCH-Repetitions ::=ENUMERATED { n2, n4, n8}" expressed above may be understood as the information indicating x, that is, x may be equal to 2, 4, or 8. Optionally, y may be equal to x.

In this embodiment of this application, the UE may learn of the number of repetitions of the HARQ-ACK by using the following signaling:
a new parameter of BWP-UplinkCommon in an uplink common configuration SIB (UplinkConfigCommonSIB) in a parameter serving cell common configuration SIB (ServingCellConfigCommonSIB) in the SIB1.

It may be understood that the numbers 1, 2, 4, and 8 of times of sending the HARQ-ACK described above are merely examples, and should not be construed as any limitation on embodiments of this application. For example, the number of times of sending the HARQ-ACK may alternatively be 3, 6, or greater than 8. Examples are not enumerated. The new parameter described above is described by using signaling overheads of three bits (bits) as an example, but should not be construed as any limitation on embodiments of this application.

It may be understood that the name NumberofMsg4PUCCH-Repetitions of the new parameter described in this embodiment of this application is merely an example. For example, the name of the new parameter may alternatively be NumberofMsg4PUCCH-Repetitions-r18, NumberofHARQ-ACKforMsg4-Repetitions, or the like. Examples are not enumerated in embodiments of this application.

In another possible implementation, the information indicating x may be included in PUCCH-ConfigCommon in a parameter BWP-UplinkCommon in the SIB1. Generally, the cell-specific PUCCH time domain resource may be configured based on PUCCH-ConfigCommon in the parameter BWP-UplinkCommon. Therefore, in this embodiment of this application, the number of repetitions of the PUCCH for sending the Msg4 HARQ-ACK may be configured in PUCCH-ConfigCommon.

For example, a format of a new parameter NumberofMsg4PUCCH-Repetitions in PUCCH-ConfigCommon in the parameter BWP-UplinkCommon may be expressed as follows:

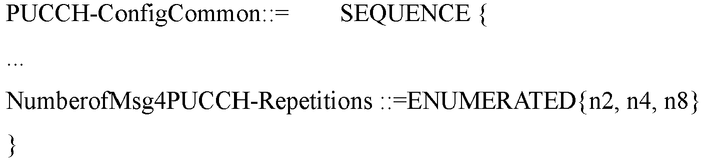

It may be understood that other parameters in PUCCH-ConfigCommon in BWP-UplinkCommon are omitted by the ellipsis. Descriptions of the ellipsis are not described in detail in embodiments of this application. For descriptions of n2, n4, and n8, refer to the foregoing descriptions.

In this embodiment of this application, the parameter PUCCH-ConfigCommon may be used to configure both a cell-specific PUCCH resource and a number of repetitions based on PUCCH-ResourceCommon and NumberofMsg4PUCCH-Repetitions.

In this embodiment of this application, the time domain resource of the PUCCH may be jointly determined based on values 0 to 15 indicated by the PUCCH-ResourceCommon field in PUCCH-ConfigCommon and the information that is in the SIB1 and that indicates x.

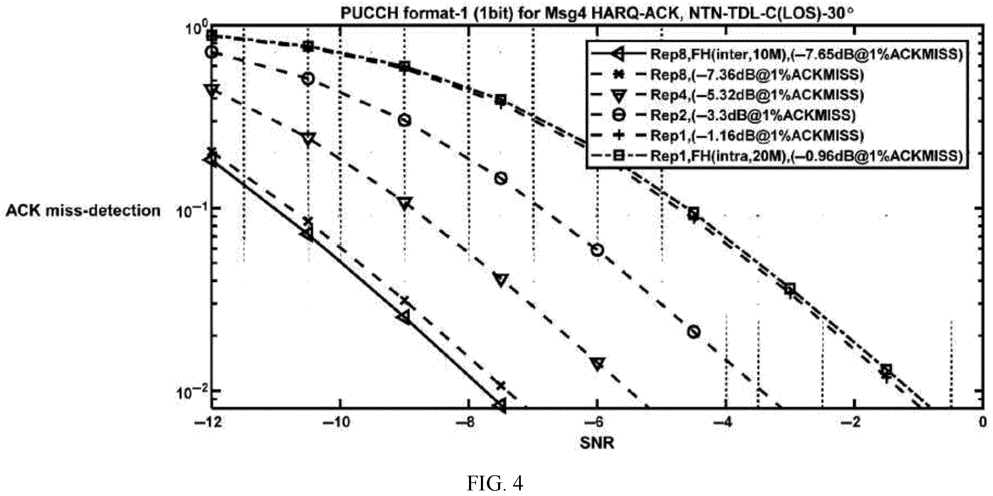

FIG. 4 is a diagram of a simulation result according to an embodiment of this application. For a channel with an insufficient link budget, repetition (repetition) sending is the simplest and most effective enhancement method. FIG. 4 simulates a bit error ratio (Bit error ratio, BER), for example, ACK miss-detection obtained when a PUCCH for sending a Msg4 HARQ-ACK is repeatedly sent. In FIG. 4, simulation is performed by using NTN-TDL-C (LOS)-30° as an example. -0.96 dB, -1.16 dB, -3.3 dB, -5.32 dB, -7.36 dB and -7.65 dB shown in FIG. 4 are respectively described by using an example in which an SNR is equal to 1% for corresponding numbers of repetitions. Rep1, FH (intra, 20M) shown in FIG. 4 indicates performance obtained when a number of repetitions is 1 and intra-slot frequency hopping is used, Rep1 indicates performance obtained when a number of repetitions is 1, Rep2, Rep4, and Rep8 respectively indicate performance obtained when a number of repetitions is 2, 4, and 8, and Rep8, FH (inter, 20M) indicates performance obtained when a number of repetitions is 8 and inter-slot frequency hopping is used. In FIG. 4, a horizontal coordinate indicates the SNR in a unit of dB, and a vertical coordinate indicates a BER. 20M shown in FIG. 4 is short for 20 MHz, and may be understood as a bandwidth used by the terminal device. The TDL described in this embodiment of this application may be understood as a channel model, for example, may be referred to as a tapped delay line (tapped delay line) (or may be referred to as a tapped delay line model).

According to the simulation result, in the TDL-C-30° elevation channel, when the HARQ-ACK is repeatedly transmitted twice, four times, and eight times, performance gains of about 2.5 dB, 4 dB, and 6.5 dB can be obtained respectively compared with once repetition. Based on that the PUCCH for sending the Msg4 HARQ-ACK described above may have a gap of 1.8 dB to 6 dB in an NTN scenario, repetition sending can effectively narrow the SNR gap. It may be understood that the SNR gap described in this embodiment of this application is equal to SNR-CNR. Repeatedly sending the HARQ-ACK can effectively improve a decoding SNR, thereby reducing the SNR gap.

In this embodiment of this application, the network device broadcasts, in the SIB1, a repetition resource configuration of the PUCCH for sending the Msg4 HARQ-ACK, so that the NTN UE can send the PUCCH in a repetition sending manner when returning an ACK message to the network device based on the Msg4. Therefore, a link coding threshold can be effectively reduced, a probability that the UE re-initiates a RACH procedure can be reduced, and an access delay can be reduced.

### Implementation 2

The broadcast message is the SIB19, and the SIB19 includes the information indicating x.

Before initial access, the NTN UE in the satellite cell needs to further decode the SIB19 message based on the SIB1 message, to find a timing compensation parameter related to timing advance (timing advance, TA), and the like. After receiving the SIB1 message, non-NTN UE in the cell can initiate random access without decoding the SIB 19.

Therefore, in this embodiment of this application, a new parameter NumberofMsg4PUCCH-Repetitioins may be added to the SIB19, and the new parameter is used to indicate the NTN UE to send the Msg4 HARQ-ACK in a repetition sending manner during initial access.

In an example, a format of the new parameter NumberofMsg4PUCCH-Repetitioins in the SIB19 may be expressed as follows:

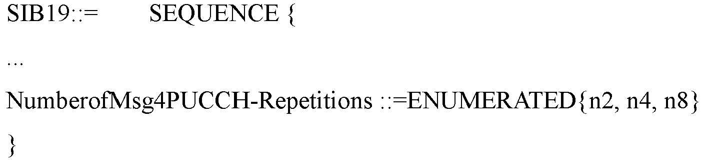

It may be understood that other parameters in the SIB19-r17 are omitted by the ellipsis. Descriptions of the ellipsis are not described in detail in embodiments of this application. For descriptions of n2, n4, and n8, refer to the foregoing descriptions. It may be understood that "NumberofMsg4PUCCH-Repetitions ::=ENUMERATED{n2, n4, n8}" expressed above may be understood as the information indicating x, that is, x may be equal to 2, 4, or 8. Optionally, y may be equal to x.

In this embodiment of this application, the number of sending repetitions is configured based on the SIB19, so that the NTN UE can effectively learn of the number of repetitions of the HARQ-ACK based on the SIB19, and send the HARQ-ACK in a repetition sending manner. This effectively reduces a link coding threshold, reduces a probability that the UE re-initiates a RACH procedure, and reduces an access delay.

In another example, when the SIB message includes the SIB19 message, that is, the UE can initiate random access only after decoding the SIB19 message (indicating that the UE is NTN UE), the SIB 19 may be used to implicitly indicate that the UE needs to repeatedly send the Msg4 HARQ-ACK. In this case, x may be z1. Optionally, y may be equal to z1.

In this embodiment of this application, without additional signaling overheads, it can be effectively ensured that the NTN UE can send the HARQ-ACK in a repetition sending manner. This effectively reduces the link coding threshold, reduces the probability that the UE re-initiates the RACH procedure, and reduces the access delay.

### Implementation 3

In this embodiment of this application, the number y of repetitions for sending the HARQ-ACK may be bound to the number of repetitions of the Msg3. Alternatively, it may be understood that the number of repetitions of the PUCCH for sending the Msg4 HARQ-ACK and the number of repetitions of the PUSCH for sending the Msg3 are in a binding relationship (or have a correspondence or an association relationship).

For example, a format of a parameter NumberofMsg3-RepetitionsList in BWP-UplinkCommon is expressed as follows:
NumberofMsg3-RepetitionsList SEQLTENCE(SIZE(4)) of NumberofMsg3-Repetitions
NumberofMsg3-Repetitions ::= ENUMERATED{n1, n2, n3, n4, n7, n8, n12, n16}

It may be understood that "NumberofMsg3-Repetitions ::= ENUMERATED{n1, n2, n3, n4, n7, n8, n12, n16}" expressed above may be understood as the information indicating x. A value of y may be equal to z2. For descriptions of x, the first threshold, z2, and y, refer to the foregoing descriptions.

In this embodiment of this application, if the network device configures, in BWP-UplinkCommon, the number of repetitions for transmission of the Msg3 PUSCH, it indicates that the network device implicitly enables repetition of the PUCCH for the Msg4 HARQ-ACK based on the number of repetitions of the Msg3, and the number y of repetitions may correspond to the number of repetitions of the Msg3.

In this embodiment of this application, the terminal device may determine the number of repetitions of the feedback message based on the number of repetitions of the Msg3 or Msg1, to implicitly enable repetition of the feedback message. This not only indicates y, but also effectively ensures that the terminal device can complete initial access. For example, when y is greater than or equal to 2, performance of a PUCCH for sending the feedback message can be effectively enhanced, thereby achieving coverage enhancement.

It may be understood that Implementation 1 to Implementation 3 above are separately described by using an example in which the broadcast message includes the information indicating x. The following Implementation 4 to Implementation 6 describe in detail at least one of information about inter-slot frequency hopping or information about JEC that is further included in the broadcast message.

### Implementation 4

The broadcast message includes the information indicating x, information indicating that the UE supports inter-slot frequency hopping, information about a first-hop PRB, and information about a second-hop PRB.

In an example, based on the information indicating x described above, a parameter for enabling inter-slot frequency hopping, for example, a starting PRB (startingPRB) (which may also be referred to as the first-hop PRB), an inter-slot frequency hopping (interSlotFrequencyHopping) enabler, and a second-hop PRB (secondHopPRB) is added.

For example, a format of related information of inter-slot frequency hopping in the broadcast message is expressed as follows:

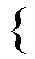

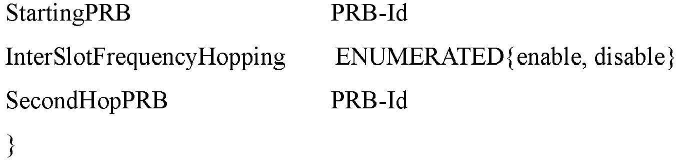

Optionally, the three parameters related to inter-slot frequency hopping described above and the information indicating x may be in a same parameter, for example, are all in BWP-UplinkCommon in the SIB1 described in Implementation 1, for another example, are all in PUCCH-ConfigCommon in BWP-UplinkCommon in the SIB1 described in Implementation 1, for another example, are all in the SIB 19 in Implementation 2, or for another example, are all in the parameter corresponding to the number of repetitions of the Msg3 in Implementation 3. Examples are not enumerated herein. Optionally, the three parameters described above and the information indicating x may alternatively be in different parameters in a same broadcast message. Optionally, the three parameters described above and the information indicating x may alternatively be in different broadcast messages. For example, the three parameters described above are in the SIB 19, and the information indicating x is in the SIB1. Examples are not enumerated.

In another example, based on the information indicating x described above, an inter-slot frequency hopping enabler (or referred to as an enabling switch of inter-slot frequency hopping) is added.

For example, a format of the inter-slot frequency hopping enabler in the broadcast message is expressed as follows:

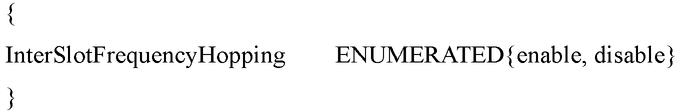

For example, the first-hop PRB and the second-hop PRB may be calculated by the UE based on a number of PDCCH CCEs, a PDCCH CCE location, a PRI field in DCI, and the like. Alternatively, the first-hop PRB and the second-hop PRB may be determined based on a BWP resource for transmitting the Msg3, or the like. For specific descriptions of determining the first-hop PRB and the second-hop PRB based on the BWP resource for transmitting the Msg3, refer to FIG. 3. Details are not described herein again.

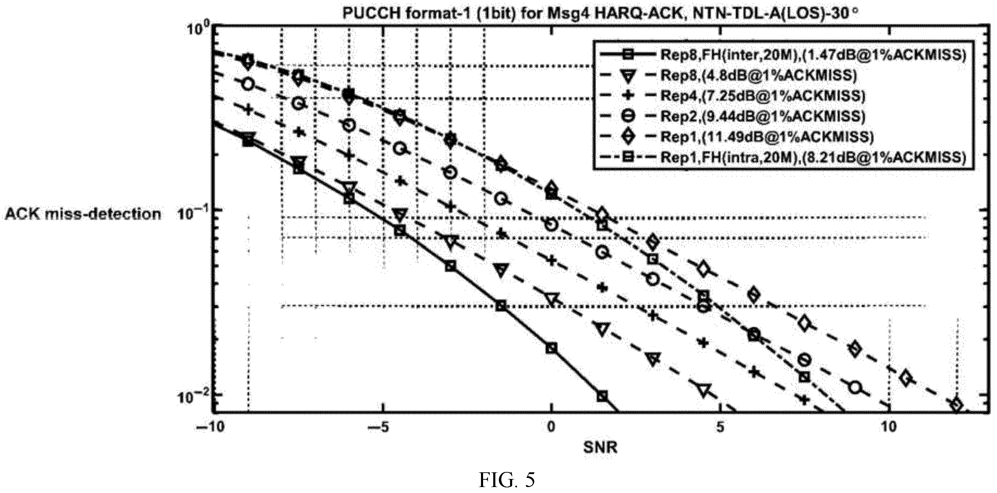

FIG. 5 is a diagram of a simulation result according to an embodiment of this application. For descriptions of horizontal and vertical coordinates shown in FIG. 5, performance of each curve, and the like, refer to FIG. 4. Details are not described herein again. FIG. 5 shows performance (for example, corresponding to Rep1 in FIG. 5) of a baseline (no repetition and no frequency hopping), performance (for example, corresponding to Rep1, FH (intra, 20M) in FIG. 5) of no repetition + intra-slot frequency hopping (FH, intra), performance (for example, corresponding to Rep2, Rep4, and Rep8 in FIG. 5) of repetition + no frequency hopping, and performance (for example, corresponding to Rep8, FH (inter, 20M) in FIG. 5) of repetition + inter-slot frequency hopping. It can be learned from FIG. 5 that, in this simulation scenario (for example, TDL-A-30°, NLOS channel scenario), inter-slot frequency hopping may bring a performance gain of about 3 dB (for example, a comparison between 4.8 dB and 1.47 dB) compared with no frequency hopping, that is, the coding threshold is decreased by 3 dB.

It can be learned from FIG. 5 that, on the basis that the UE repeatedly sends the HARQ-ACK, the UE enables inter-slot frequency hopping, so that coding performance can be further improved.

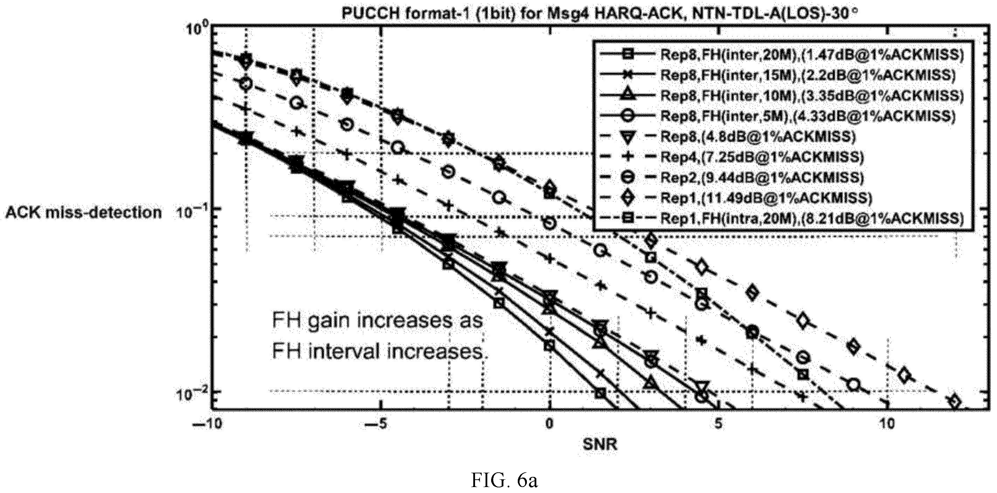

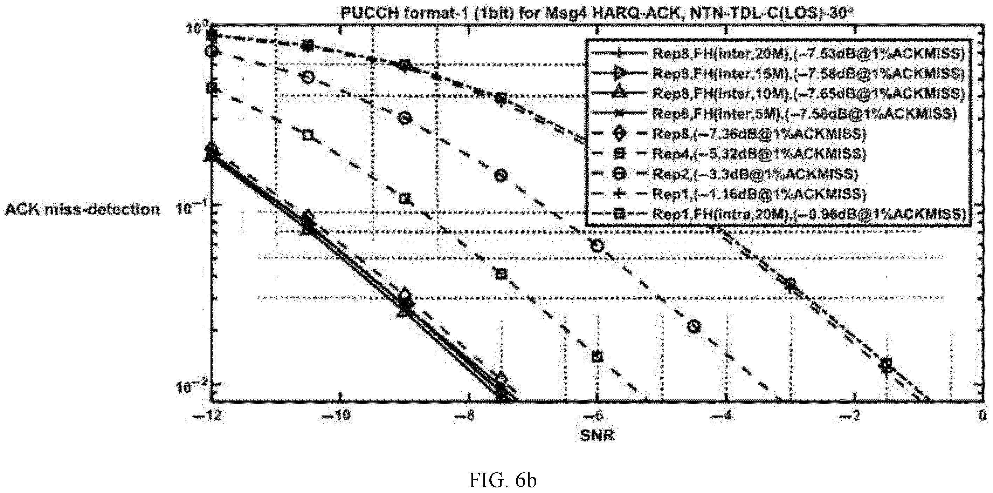

FIG. 6a is a diagram of a simulation result in a TDL-A channel scenario according to an embodiment of this application. FIG. 6b is a diagram of a simulation result in a TDL-C channel scenario according to an embodiment of this application. It can be learned from FIG. 6a and FIG. 6b that inter-slot frequency hopping has a low performance gain on a TDL-C channel, and has a high performance gain on a TDL-A channel. For descriptions of horizontal and vertical coordinates shown in FIG. 6a and FIG. 6b, performance of each curve, and the like, refer to FIG. 4. Details are not described herein again.

It may be understood that, although a gain of inter-slot frequency hopping on the TDL-C channel is less than a gain of inter-slot frequency hopping on the TDL-A channel, a performance gain may still be brought through inter-slot frequency hopping, for example, performance corresponding to Rep8, FH (inter, 10M) shown in FIG. 6b.

Generally, the PUCCH for sending the Msg4 HARQ-ACK supports intra-slot frequency hopping. It can be learned from FIG. 6a that, on the TDL-A channel, an obvious gain can be obtained through intra-slot frequency hopping (for example, two curves corresponding to Rep1 and Rep1, FH (intra, 20M) shown in FIG. 6a). It can be learned from FIG. 6b that, on the TDL-C channel, a gain obtained through intra-slot frequency hopping is poorer than that obtained through no frequency hopping (for example, two curves corresponding to Rep1 and Rep1, FH (intra, 20M) shown in FIG. 6b). This is because intra-slot frequency hopping causes interruption of PUCCH-format-1 during channel estimation interpolation. Compared with that intra-slot frequency hopping is not performed, a slight channel estimation performance loss is caused. In the TDL-C scenario, because the channel is a LOS scenario, there are few multipaths, and a maximum delay spread of the channel is low, a coherence bandwidth of the channel is large, a channel frequency selective gain that can be obtained through frequency hopping is small, and the gain does not offset a performance loss caused by deterioration of channel estimation interpolation.

Therefore, in this embodiment of this application, inter-slot frequency hopping may be used in the TDL-C scenario, and inter-slot frequency hopping or intra-slot frequency hopping may be used in the TDL-A scenario. Generally, whether signaling is for the TDL-A scenario or signaling is for the TDL-C scenario is not distinguished in the broadcast message. Therefore, in this embodiment of this application, inter-slot frequency hopping is used as an example to describe the broadcast message.

In this embodiment of this application, on the basis that the UE supports repetition sending of the HARQ-ACK, inter-slot frequency hopping is enabled for repetition of the HRAQ-ACK in different slots, so that coding performance can be effectively improved.

### Implementation 5

Implementation 4 is described by using an example in which the broadcast message explicitly indicates the related information of inter-slot frequency hopping. Implementation 5 provides a manner of implicitly indicating inter-slot frequency hopping.

If the broadcast message includes the information indicating x, it is determined, based on the information indicating x, to enable inter-slot frequency hopping. For example, if the SIB 1 includes the information indicating x, the UE may determine y based on the information indicating x, and determine that the UE supports inter-slot frequency hopping. For another example, if the UE receives the SIB19, the UE may determine y based on the SIB19, and determine that the UE supports inter-slot frequency hopping. For another example, if the SIB19 includes the information indicating x, the UE may determine based on the information indicating x, and determine that the UE supports inter-slot frequency hopping. For another example, if the broadcast message includes the number of repetitions of the Msg3, the UE may determine y based on the number of repetitions of the Msg3, and determine, based on the number of repetitions of the Msg3, that the UE supports inter-slot frequency hopping. In other words, when the broadcast message includes the information indicating x, the network device may implicitly enable the UE to use an inter-slot frequency hopping transmission mode for repetitions in a plurality of slot when sending the Msg4 HARQ-ACK.

Optionally, the first-hop PRB and the second-hop PRB may be calculated by the UE based on a number of PDCCH CCEs, a PDCCH CCE location, a PRI field in DCI, and the like. Alternatively, the first-hop PRB and the second-hop PRB may be determined based on a BWP resource for transmitting the Msg3, or the like. For specific descriptions of determining the first-hop PRB and the second-hop PRB based on the BWP resource for transmitting the Msg3, refer to FIG. 3. Details are not described herein again.

In this embodiment of this application, on the basis that the UE supports repetition sending of the HARQ-ACK, the UE is implicitly indicated to enable inter-slot frequency hopping for repetition of the HRAQ-ACK in different slots. In this way, no additional signaling overheads are required, and coding performance can be effectively improved.

### Implementation 6

The broadcast message includes the information indicating x and related information of JCE.

In an example, based on the information indicating x described above, a parameter related to PUCCH-DMRS-bundling is added, for example, a parameter (for example, Msg4 PUCCH-DMRS-Bundling) indicating that the UE supports JCE, a JCE window length, a parameter, namely, a PUCCH time domain window length for Msg4 HARQ-ACK (Msg4 PUCCH-TimeDomainWindowLength) (which may be understood as a DMRS time window or a JCE window length), a frequency hopping time window (which may also be referred to as a frequency hopping window length), or a parameter, namely, a PUCCH frequency hopping interval for Msg4 HARQ-ACK (Msg4 PUCCH-FrequencyHoppingInterval).

For example, a format of the related information of JCE in the broadcast message is expressed as follows:

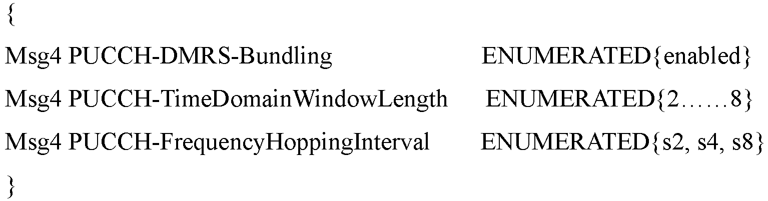

The foregoing shows three parameters for enabling a cell-specific PUCCH-DMRS bundling configuration when the Msg4 HARQ-ACK is sent, and corresponding value ranges of the three parameters, and a DMRS enabling switch, the JCE window length, and the frequency hopping time window are included. 3 to 7 may be omitted by the ellipsis shown above. The values of the parameters described above are merely examples, and should not be construed as any limitation on embodiments of this application.

Optionally, the three JCE-related parameters described above and the information indicating x may be in a same parameter, for example, are all in BWP-UplinkCommon in the SIB1 described in Implementation 1, for another example, are all in PUCCH-ConfigCommon in BWP-UplinkCommon in the SIB1 described in Implementation 1, for another example, are all in the SIB19 in Implementation 2, or for another example, are all in the parameter corresponding to the number of repetitions of the Msg3 in Implementation 3. Examples are not enumerated herein. Optionally, the three parameters described above and the information indicating x may alternatively be in different parameters in a same broadcast message. Optionally, the three parameters described above and the information indicating x may alternatively be in different broadcast messages. For example, the three parameters described above are in the SIB19, and the information indicating x is in the SIB1. Examples are not enumerated.

In another example, another flexible implicit indication manner may be further derived based on the information indicating x and the related information of JCE described above.

For example, if the broadcast message includes the information indicating x, it is determined, based on the information indicating x, to enable JCE. For another example, the broadcast message includes the information indicating x and a JCE enabling switch. When the JCE window length is not explicitly indicated in the broadcast message, the JCE window length may be equal to y. In other words, the UE may perform JCE in repetition slots, and the UE maintains power and phase consistency. When the JCE window length is equal to y, the UE disables inter-slot frequency hopping. In other words, the UE may send the Msg4 HARQ-ACK in a "repetition + JCE" manner.

For another example, the broadcast message includes the information indicating x and the information about the JCE window length. For another example, the broadcast message includes the information indicating x, the information for enabling JCE, and the information about the JCE window length. In this case, when the JCE window length is explicitly indicated in the broadcast message, and the JCE window length is equal to y, the UE disables inter-slot frequency hopping. In other words, the UE may send the Msg4 HARQ-ACK in a "repetition + JCE" manner. When the JCE window length is less than y, the UE may enable inter-slot frequency hopping. In other words, the UE may send the Msg4 HARQ-ACK in a "repetition + JCE + frequency hopping" manner. Optionally, the frequency hopping time window may be equal to the JCE window length. For example, if the number y of repetitions for sending the Msg4 HARQ-ACK is equal to 8, if the JCE window length is equal to 8, the UE uses the sending manner of "repetition + JCE"; or if the JCE window length is less than 8, for example, the JCE window length is equal to 2 or 4, the UE may use the sending manner of "repetition + JCE + frequency hopping".

For another example, the broadcast message includes the information indicating x, the information for enabling JCE, the JCE window length, and the frequency hopping time window.

It can be learned from the simulation results shown in FIG. 6a and FIG. 6b that the performance gain, for example, corresponding to Rep8, FH (inter, 10M) shown in FIG. 6b, obtained through inter-slot frequency hopping on the TDL-C channel is small. In this simulation scenario, an overall signal-to-noise ratio range of the curve is low. Therefore, accuracy of channel estimation has great impact on a simulation result. Rep8 in FIG. 6b indicates that the number of repetitions for sending the Msg4 HARQ-ACK is 8, and Rep8, FH (inter, 5M), Rep8, FH (inter, 10M), Rep8, FH (inter, 15M), and Rep8, FH (inter, 20M) are obtained by performing inter-slot frequency hopping simulation between slots. Channel estimation is separately performed for each slot. If it is considered that joint channel estimation is performed between eight repetitions for sending the HARQ-ACK, the accuracy of channel estimation may be improved and in the low signal-to-noise ratio range, a performance gain of more than 0.29 dB (which is obtained based on -7.36 dB corresponding to Rep8 and -7.65 dB corresponding to Rep8, FH (inter, 10M)) may be obtained. Therefore, during repetition sending of the Msg4 HARQ-ACK, using "repetition + JCE" may obtain a higher performance gain than using "repetition + inter-slot frequency hopping".

In this embodiment of this application, based on a performance gain brought by repeatedly sending the Msg4 HARQ-ACK, the JCE technology is used, to further improve the performance gain and improve the coding performance.

It may be understood that the value of x, the value of y, and the like in Implementation 1 to Implementation 6 are merely examples, and should not be understood as a limitation on embodiments of this application.

In some other embodiments of this application, an embodiment of this application further provides a satellite communication method.

An NTN cell includes a large number of beams. For example, for an orbital satellite LEO-600, when a beam sweeping angle is 33 degrees to 45 degrees and a half-power beamwidth is 2.7 degrees, the NTN cell (an entire satellite coverage area) may include about 1000 beams.

In a coverage area of a same satellite, a round trip delay (round trip delay, RTD) between UE in a beam close to a sub-satellite point and the satellite is small, and an RTD between UE in a beam close to an edge of the coverage area and the satellite is large. Consequently, a link budget is poor. When coverage enhancement is considered, enhancement may be performed for a user at the edge of a coverage area of the cell. Optionally, a number of repetitions of a PUCCH for sending a Msg4 HARQ-ACK may be configured for UE at a cell edge.

It may be understood that for a specific manner of the satellite communication method in this embodiment of this application, refer to FIG. 3 or Implementation 1 to Implementation 6. Optionally, based on the method described above, the method further includes: The UE determines that the UE is located at a cell edge. In other words, when obtaining the broadcast message, the UE may enable at least one of repetition of the feedback message, inter-slot frequency hopping, or JCE when determining that the UE is located at the cell edge.

Optionally, when the UE determines that the UE is located at the cell edge, the UE may enable at least one of repetition of a Msg4 HARQ-ACK, JCE, and inter-slot frequency hopping. A number y of repetitions of the HARQ-ACK, a JCE window length, a first-hop PRB, a second-hop PRB, a frequency hopping time window, a frequency hopping interval, and the like are determined according to a preset implicit enabling rule. The preset implicit enabling rule described herein may be defined in a standard, configured by a network device, or the like. This is not limited in embodiments of this application. In other words, when determining that the UE is located at the cell edge, the UE may enable at least one of repetition of the feedback message, inter-slot frequency hopping, or JCE. If the UE is located at the cell edge, the UE may repeatedly send a Msg4-HARQ-ACK.

For example, the UE may determine, based on at least one of the following, that the UE is located at the cell edge: ephemeris information in a SIB19, global navigation satellite system (global navigation satellite system, GNSS) location information, and an elevation angle that is from a beam to a satellite and that is obtained by the UE.

In an NTN, in a downlink synchronization phase before initial access (a network side delivers an SSB, and UE performs downlink synchronization), the UE may obtain an SSB index (index) in a beam to which the UE belongs (each beam corresponds to one SSB index). Generally, a pattern (pattern) relationship between an SSB index and a relative location of each beam position in a cell is a preconfigured relationship. Therefore, the UE may obtain a correspondence between the SSB index and the beam position. For example, the UE may learn, based on the SSB index, a location of the beam to which the UE belongs in a satellite. The UE may determine, based on an SSB index in a downlink synchronization process, whether the UE is located in a beam at the cell edge, or the UE may calculate an elevation angle from a beam center point to the satellite based on the ephemeris information in the SIB19, GNSS location information of the UE, and the like. The beam center point is a beam obtained by the UE, or the beam to which the UE belongs, or may be understood as a beam corresponding to the UE, or the like.

For example, the UE may determine, based on a received SSB index, a location of a beam to which the UE belongs in an entire satellite cell. For example, the UE may determine, based on a rule of mapping between an SSB index and a beam position during networking planning, the location of the beam to which the UE belongs in the entire satellite cell. If the UE determines that the UE belongs to the beam at the cell edge, the UE enables repetition of the Msg4 HRAQ-ACK. The number y of repetitions for sending the Msg4 HARQ-ACK by the UE may be defined in a standard, or the implicit enabling rule may be agreed on in advance. The enabling rule includes: There may be an association relationship between y and a distance D between a beam position of the UE and a beam position of a sub-satellite point of the satellite. For example, when the distance D>d0, y=2; when the distance D>d1, y=4; or when the distance D>d2, y=8. d0<d1<d2, d0, d1, and d2 are different distance thresholds. A specific value is not limited in embodiments of this application. On the basis of repeatedly sending the Msg4 HARQ-ACK, at least one of inter-slot frequency hopping and JCE is enabled. For related information of inter-slot frequency hopping and related information JCE, refer to the foregoing embodiments. Alternatively, the implicit enabling rule may be agreed on in advance: For example, if the number y of repetitions of the HARQ-ACK is equal to 8, the frequency hopping time window is equal to 4, and the JCE window length is equal to 4. It may be understood that the implicit enabling rule described herein is merely an example. Examples are not enumerated in embodiments of this application.

For example, the UE may calculate a communication elevation angle θ from a beam to a satellite based on ephemeris information in a SIB19 and with reference to GNSS location information of the UE (when the UE has a GNSS capability), and determine, based on a value of θ, whether to enable the foregoing enhancement technology. For example, when the elevation angle θ<θ_0, y=2; when the elevation angle θ<θ_1, y=4; or when the elevation angle θ<θ_2, y=8. θ_0<θ_1<θ_2, θ_0, θ_1 and θ_2 are different angle thresholds. A specific value is not limited in embodiments of this application.

In this embodiment of this application, it can be effectively ensured that the UE at the edge of the NTN cell enhances the Msg4 HARQ-ACK.

In some other embodiments of this application, an embodiment of this application further provides a satellite communication method.

In a random access procedure, UE sends an uplink message to a network device, and correspondingly, the network device receives the uplink message. The network device sends a downlink message to the UE, and the UE receives the downlink message. The UE sends a feedback message for the downlink message to the network device, and correspondingly, the network device receives the feedback message. For example, the uplink message described herein may include a Msg1 or Msg3 in a four-step random access procedure, or a MsgA in a two-step random access procedure. The downlink message described herein may include a Msg2 or Msg4 in the four-step random access procedure, or a MsgB in the two-step random access procedure. The feedback message may include a Msg2 HARQ-ACK or a Msg4 HARQ-ACK in the four-step random access procedure, or a MsgB HARQ-ACK in the two-step random access procedure.

Therefore, in this embodiment of this application, when determining that the UE is located at a cell edge, the network device may configure, in the downlink message, information indicating x.

A method for determining, by the network device, that the UE is located at a cell edge includes at least one of the following:
The network device may determine, based on a resource for the UE to send the Msg1, that the UE is located at the cell edge. Generally, when sending the Msg1, the UE needs to know a preamble format used by the UE and a random access channel occasion (RACH occasion, RO) for sending a preamble. For example, the network device may indicate, to the UE based on an SSB, a time-frequency resource used when the UE sends the preamble. Therefore, when receiving the Msg1, the network device may determine, based on information like the preamble format and the RO, an SSB index and a beam index of the UE, to learn of, based on the SSB index and the beam index, an elevation angle of a beam used by the UE. The network device may determine, based on the elevation angle, whether the UE is located at the cell edge. If the elevation angle is less than or equal to 30 degrees, it may be determined that the UE is located at the cell edge. If the elevation angle is greater than 30 degrees, it may be determined that the UE is not located at the cell edge.

The network device may determine, based on an elevation angle between the UE and a satellite, that the UE is located at the cell edge. If the elevation angle between the UE and the satellite is less than or equal to a threshold, it may be determined that the UE is located at the cell edge. If the elevation angle between the UE and the satellite is greater than a threshold, it may be determined that the UE is not located at the cell edge.

The network device may determine, based on a distance between the UE and a satellite, that the UE is located at the cell edge. If the distance between the UE and the satellite is greater than or equal to a threshold, it may be determined that the UE is located at the cell edge. If the distance between the UE and the satellite is less than or equal to a threshold, it may be determined that the UE is not located at the cell edge.

It may be understood that the method for determining, by the network device, that the UE is located at the cell edge described above is merely an example, and should not be understood as a limitation on embodiments of this application. It may be understood that the elevation angle between the UE and the satellite or the distance between the UE and the satellite described above may include an elevation angle between a beam to which the UE belongs and the satellite or a distance between a beam to which the UE belongs and the satellite. It may be understood that the foregoing descriptions are described by using an example in which the network device can obtain the elevation angle between the UE and the satellite or the distance between the UE and the satellite before the UE completes random access. If the network device cannot obtain the elevation angle between the UE and the satellite or the distance between the UE and the satellite before the UE completes random access, the network device may determine, based on the resource for the UE to send the Msg1, whether the UE is located at the cell edge.

In a possible implementation, when the network device determines that the UE is located at the cell edge, the network device may include, in the downlink message, information indicating x, related information of inter-slot frequency hopping, and related information of JCE. The downlink message may be the Msg2 or Msg4. Alternatively, DCI (for example, DCI 1_0 scrambled by using a random access radio network temporary identifier (random access radio network temporary identity, RA-RNTI)) used to schedule the Msg2 includes information indicating x, related information of inter-slot frequency hopping, and related information of JCE. Alternatively, DCI (for example, DCI 1_0 Msg4 of a temporary cell radio network temporary identifier (temporary cell RNTI, TC-RNTI)) used to schedule the Msg4 includes information indicating x, related information of inter-slot frequency hopping, and related information of JCE. Alternatively, DCI (for example, DCI 1_0 scrambled by using a MsgB-RNTI) used to schedule the MsgB includes information indicating x, related information of inter-slot frequency hopping, and related information of JCE.

It may be understood that, when the information indicating x, the related information of inter-slot frequency hopping, and the related information of JCE are included in the foregoing message, a quantity of bits occupied by the information indicating x, a quantity of bits occupied by the related information of inter-slot frequency hopping, and a quantity of bits occupied by the related information of JCE that are included may be determined based on reserved bits in the foregoing messages. For example, the DCI used to schedule the Msg4 includes two reserved bits, and the two reserved bits may be used to indicate a number of repetitions of the Msg4 HARQ-ACK. For example, when values of the two bits are sequentially 00, 01, 10, and 11, the four values may respectively correspond to numbers {2, 4, 8, 12} of repetitions. If the DCI does not include this field, it indicates that the number of repetitions is 1. Alternatively, the four values 00, 01, 10, and 11 respectively correspond to numbers {1, 2, 4, 8} of repetitions. Optionally, if the DCI does not include the two reserved bits, it indicates that the number of repetitions is 1, or repetition of the feedback message is disabled.

The following describes a communication apparatus provided in embodiments of this application.

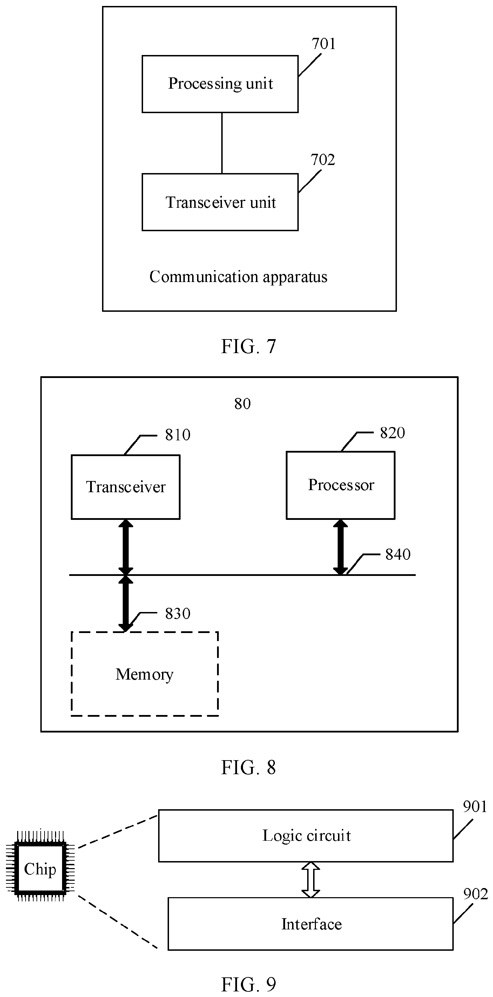

In this application, the communication apparatus may be divided into functional modules based on the foregoing method embodiments. For example, functional modules may be obtained through division based on corresponding functions, or two or more functions may be integrated into one processing module. The integrated module may be implemented in a form of hardware, or may be implemented in a form of a software functional module. It should be noted that, in this application, module division is an example, and is merely logical function division. During actual implementation, another division manner may be used. The following describes in detail the communication apparatus in embodiments of this application with reference to FIG. 7 to FIG. 9.

FIG. 7 is a diagram of a structure of the communication apparatus according to an embodiment of this application. As shown in FIG. 7, the communication apparatus includes a processing unit 701 and a transceiver unit 702.

In some embodiments of this application, the communication apparatus may be the terminal device or the chip described above, and the chip may be disposed in the terminal device. In other words, the communication apparatus may be configured to perform steps, functions, or the like performed by the terminal device or the UE in the foregoing method embodiments (including FIG. 3).

The transceiver unit 702 is configured to receive a broadcast message, where the broadcast message includes information indicating a number x of repetitions, and x is a positive integer; and
the processing unit 701 is configured to send a feedback message for a downlink message in a random access procedure based on the broadcast message, where a number y of repetitions for sending the feedback message is determined based on x, and y is a positive integer.

It may be understood that, that the processing unit 701 is configured to send a feedback message for a downlink message in a random access procedure based on the broadcast message includes: The processing unit 701 determines y based on the broadcast message, and the transceiver unit 702 outputs the feedback message; or the processing unit 701 determines y based on the broadcast message, and then outputs the feedback message to the transceiver unit 702, and the transceiver unit 702 sends the feedback message to a network device.

In some other embodiments of this application, the communication apparatus may be the network device or the chip described above, and the chip may be disposed in the network device. In other words, the communication apparatus may be configured to perform steps, functions, or the like performed by the network device in the foregoing method embodiments (including FIG. 3).

The processing unit 701 is configured to obtain a broadcast message, where the broadcast message includes information indicating a number x of repetitions, x corresponds to a number y of repetitions of a feedback message for a downlink message in a random access procedure, and both x and y are positive integers; and
the transceiver unit 702 is configured to send the broadcast message.

It may be understood that specific descriptions of the transceiver unit and the processing unit described in this embodiment of this application are merely examples. For specific functions, performed steps, or the like of the transceiver unit and the processing unit, refer to the foregoing method embodiments. Details are not described herein again.

In the foregoing embodiments, for descriptions of the broadcast message, x, y, a SIB1, a SIB19, z1, z2, inter-slot frequency hopping, JCE, and the like, refer to the descriptions in the foregoing method embodiments. Details are not described herein again.

The foregoing describes the communication apparatus in embodiments of this application. The following describes possible product forms of the communication apparatus. It should be understood that a product in any form that has a function of the communication apparatus in FIG. 7 falls within the protection scope of embodiments of this application. It should be further understood that the following descriptions are merely examples, and do not limit a product form of the communication apparatus in embodiments of this application.

In a possible implementation, in the communication apparatus shown in FIG. 7, the processing unit 701 may be one or more processors, and the transceiver unit 702 may be a transceiver, or the transceiver unit 702 may be a transmitting unit and a receiving unit. The transmitting unit may be a transmitter, and the receiving unit may be a receiver. The transmitting unit and the receiving unit are integrated into one device, for example, a transceiver. In embodiments of this application, the processor and the transceiver may be coupled, or the like. A manner of connection between the processor and the transceiver is not limited in embodiments of this application. In a process of performing the foregoing method, a process of sending information in the foregoing method may be understood as a process of outputting the information by the processor. When outputting the information, the processor outputs the information to a transceiver, so that the transceiver transmits the information. After the foregoing information is outputted by the processor, other processing may further need to be performed on the information before processed information arrives at the transceiver. For example, sending the broadcast message may be understood as that the processor outputs the broadcast message to the transceiver, and then the transceiver sends the broadcast message. For another example, sending the feedback message based on the broadcast message may be understood as that the processor outputs the feedback message; or the processor outputs the processor to the transceiver, and then the transceiver sends the feedback message. Similarly, a process of receiving information in the foregoing method may be understood as a process of receiving the input information by the processor. When the processor receives the input information, the transceiver receives the foregoing information, and inputs the information to the processor. Further, after the transceiver receives the foregoing information, other processing may further need to be performed on the information before processed information is input into the processor. For example, receiving the broadcast message may be understood as that the processor receives the input broadcast message, the transceiver receives the broadcast message, or the like.

As shown in FIG. 8, a communication apparatus 80 includes one or more processors 820 and a transceiver 810.

In some embodiments of this application, the communication apparatus may be configured to perform steps, functions, or the like performed by the terminal device in the foregoing method embodiments (including FIG. 3).

The transceiver 810 is configured to receive a broadcast message, where the broadcast message includes information indicating a number x of repetitions, and x is a positive integer; and

the processor 820 is configured to send a feedback message for a downlink message in a random access procedure based on the broadcast message, where a number y of repetitions for sending the feedback message is determined based on x, and y is a positive integer.

In some other embodiments of this application, the communication apparatus may be configured to perform steps, functions, or the like performed by the network device in the foregoing method embodiments (including FIG. 3).

The processor 820 is configured to obtain a broadcast message, where the broadcast message includes information indicating a number x of repetitions, x corresponds to a number y of repetitions of a feedback message for a downlink message in a random access procedure, and both x and y are positive integers; and

the transceiver 810 is configured to send the broadcast message.

It may be understood that specific descriptions of the transceiver and the processor described in this embodiment of this application are merely examples. For specific functions, performed steps, or the like of the transceiver and the processor, refer to the foregoing method embodiments. Details are not described herein again.

In the foregoing embodiments, for descriptions of the broadcast message, x, y, a SIB1, a SIB19, z1, z2, inter-slot frequency hopping, JCE, and the like, refer to the descriptions in the foregoing method embodiments. Details are not described herein again.

In each implementation of the communication apparatus shown in FIG. 8, the transceiver may include a receiver and a transmitter. The receiver is configured to perform a receiving function (or operation), and the transmitter is configured to perform a transmitting function (or operation). In addition, the transceiver is configured to communicate with another device/apparatus through a transmission medium.

Optionally, the communication apparatus 80 may further include one or more memories 830, configured to store program instructions, data, and/or the like. The memory 830 is coupled to the processor 820. Couplings in embodiments of this application are indirect couplings or communication connections between apparatuses, units, or modules, may be in an electrical form, a mechanical form, or another form, and are used for information exchange between the apparatuses, the units, or the modules. The processor 820 may cooperate with the memory 830. The processor 820 may execute the program instructions stored in the memory 830. Optionally, at least one of the one or more memories may be included in the processor. Optionally, the one or more memories may store a preset number z1 of repetitions, a preset number z2 of repetitions, and the like.

A specific connection medium between the transceiver 810, the processor 820, and the memory 830 is not limited in embodiments of this application. In this embodiment of this application, in FIG. 8, the memory 830, the processor 820, and the transceiver 810 are connected to each other through a bus 840. The bus is represented by using a bold line in FIG. 8. A manner of connection between other components is only schematically described, but is not used as a limitation. The bus may be classified into an address bus, a data bus, a control bus, and the like. For ease of representation, only one bold line is for representing the bus in FIG. 8, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like, and can implement or perform the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus described in this application), but is not limited thereto. The memory in this embodiment of this application may alternatively be a circuit or any other apparatus that can implement a storage function, and is configured to store the program instructions and/or the data.

For example, the processor 820 is mainly configured to: process a communication protocol and communication data, control the entire communication apparatus, execute a software program, and process data of the software program. The memory 830 is mainly configured to store the software program and the data. The transceiver 810 may include a control circuit and an antenna. The control circuit is mainly configured to: perform conversion between a baseband signal and a radio frequency signal, and process the radio frequency signal. The antenna is mainly configured to receive/transmit a radio frequency signal in a form of an electromagnetic wave. An input/output apparatus like a touchscreen, a display, or a keyboard is mainly configured to: receive data input by a user and output data to the user.

After the communication apparatus is powered on, the processor 820 may read the software program in the memory 830, interpret and execute instructions of the software program, and process the data of the software program. When data needs to be transmitted in a wireless manner, the processor 820 performs baseband processing on the to-be-transmitted data, and outputs a baseband signal to a radio frequency circuit. The radio frequency circuit performs radio frequency processing on the baseband signal, and then transmits a radio frequency signal to the outside through the antenna in a form of an electromagnetic wave. When data is transmitted to the communication apparatus, the radio frequency circuit receives a radio frequency signal through the antenna, converts the radio frequency signal into a baseband signal, and outputs the baseband signal to the processor 820. The processor 820 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus described in this embodiment of this application may further have more parts/components than those in FIG. 8, and the like. This is not limited in embodiments of this application. The methods performed by the processor and the transceiver described above are merely examples. For specific steps performed by the processor and the transceiver, refer to the methods described above.

In another possible implementation, in the communication apparatus shown in FIG. 7, the processing unit 701 may be one or more logic circuits, and the transceiver unit 702 may be an input/output interface, or may be referred to as a communication interface, an interface circuit, an interface, or the like. Alternatively, the transceiver unit 702 may be a transmitting unit and a receiving unit. The transmitting unit may be an output interface, and the receiving unit may be an input interface. The transmitting unit and the receiving unit are integrated into one unit, for example, an input/output interface. As shown in FIG. 9, a communication apparatus shown in FIG. 9 includes a logic circuit 901 and an interface 902. In other words, the processing unit 701 may be implemented by using the logic circuit 901, and the transceiver unit 702 may be implemented by using the interface 902. The logic circuit 901 may be a chip, a processing circuit, an integrated circuit, a system on chip (system on chip, SoC) chip, or the like. The interface 902 may be a communication interface, an input/output interface, a pin, or the like. For example, FIG. 9 shows an example in which the communication apparatus is a chip. The chip includes the logic circuit 901 and the interface 902.

In this embodiment of this application, the logic circuit and the interface may be coupled to each other. A specific manner of connection between the logic circuit and the interface is not limited in embodiments of this application.

In some embodiments of this application, the communication apparatus may be configured to perform steps, functions, or the like performed by the terminal device in the foregoing method embodiments (including FIG. 3).

The interface 902 is configured to input a broadcast message, where the broadcast message includes information indicating a number x of repetitions, and x is a positive integer; and
the logic circuit 901 is configured to send a feedback message for a downlink message in a random access procedure based on the broadcast message, where a number y of repetitions for sending the feedback message is determined based on x, and y is a positive integer.

Optionally, the communication apparatus may further include a memory. The memory may be configured to store a preset number z1 of repetitions, a preset number z2 of repetitions, or the like.

In some other embodiments of this application, the communication apparatus may be configured to perform steps, functions, or the like performed by the network device in the foregoing method embodiments (including FIG. 3).

The logic circuit 901 is configured to obtain a broadcast message, where the broadcast message includes information indicating a number x of repetitions, x corresponds to a number y of repetitions of a feedback message for a downlink message in a random access procedure, and both x and y are positive integers; and
the interface 902 is configured to send the broadcast message.

For specific manners of the transformation matrix stored in the terminal device and the network device, refer to the foregoing descriptions. Details are not described herein again.

It may be understood that specific descriptions of the logic circuit and the interface described in this embodiment of this application are merely examples. For specific functions, performed steps, or the like of the logic circuit and the interface, refer to the foregoing method embodiments. Details are not described herein again.

In the foregoing embodiments, for descriptions of the broadcast message, x, y, a SIB1, a SIB19, z1, z2, inter-slot frequency hopping, JCE, and the like, refer to the descriptions in the foregoing method embodiments. Details are not described herein again.

It may be understood that the communication apparatus described in embodiments of this application may implement the method provided in embodiments of this application in a form of hardware, may implement the method provided in embodiments of this application in a form of software, or the like. This is not limited in embodiments of this application.

An embodiment of this application further provides a wireless communication system. The wireless communication system includes a terminal device and a network device. The terminal device and the network device may be configured to perform the method in any one (for example, FIG. 3) of the foregoing embodiments.

In addition, this application further provides a computer program. The computer program is used to implement an operation and/or processing performed by the terminal device in the method provided in this application.

This application further provides a computer program. The computer program is used to implement an operation and/or processing performed by the network device in the method provided in this application.

This application further provides a computer-readable storage medium. The computer-readable storage medium stores computer code. When the computer code is run on a computer, the computer is enabled to perform an operation and/or processing performed by the terminal device in the method provided in this application.

This application further provides a computer-readable storage medium. The computer-readable storage medium stores computer code. When the computer code is run on a computer, the computer is enabled to perform an operation and/or processing performed by the network device in the method provided in this application.

This application further provides a computer program product. The computer program product includes computer code or a computer program. When the computer code or the computer program is run on a computer, an operation and/or processing performed by the terminal device in the method provided in this application are/is performed.

This application further provides a computer program product. The computer program product includes computer code or a computer program. When the computer code or the computer program is run on a computer, an operation and/or processing performed by the network device in the method provided in this application are/is performed.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separated, and parts displayed as units may or may not be physical units, that is, may be located in one position, or may be distributed on a plurality of network units. A part or all of the units may be selected based on an actual requirement to implement technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When being implemented in the form of the software functional unit and sold or used as an independent product, the integrated unit may be stored in a computer-readable storage medium. Based on such an understanding, the technical solutions of this application essentially, or the part contributing to the conventional technologies, or all or a part of the technical solutions may be implemented in a form of a software product. The computer software product is stored in a readable storage medium and includes several instructions for instructing a computer device (which may be a personal computer, a server, a network device, or the like) to perform all or a part of the steps of the methods described in embodiments of this application. The foregoing readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A satellite communication method, wherein the method comprises:
receiving a broadcast message, wherein the broadcast message comprises information indicating a number x of repetitions, and x is a positive integer; and
sending a feedback message for a downlink message in a random access procedure based on the broadcast message, wherein a number y of repetitions for sending the feedback message is determined based on x, and y is a positive integer.

2. A satellite communication method, wherein the method comprises:
obtaining a broadcast message, wherein the broadcast message comprises information indicating a number x of repetitions, x corresponds to a number y of repetitions of a feedback message for a downlink message in a random access procedure, and both x and y are positive integers; and
sending the broadcast message.

3. The method according to claim 1 or 2, wherein the broadcast message is a system information block SIB1 or SIB19.

4. The method according to claim 1 or 2, wherein the broadcast message is a SIB19, and
that the broadcast message comprises information indicating a number x of repetitions comprises: the SIB19 implicitly indicates that x is a preset number z1 of repetitions.

5. The method according to claim 4, wherein z1=2, 4, or 8.

6. The method according to any one of claims 1 to 5, wherein y=x.

7. The method according to any one of claims 1 to 3, wherein x comprises a number of repetitions of a message Msg3 or a number of repetitions of a Msg1.

8. The method according to claim 7, wherein when x is greater than or equal to a first threshold, y is equal to a preset number z2 of repetitions; or when x is less than a first threshold, y=1.

9. The method according to claim 8, wherein the first threshold is equal to 2.

10. The method according to claim 8 or 9, wherein z2=2, 4, or 8.

11. The method according to any one of claims 1 to 10, wherein the broadcast message further comprises information indicating that a terminal device supports inter-slot frequency hopping.

12. The method according to claim 11, wherein the broadcast message further comprises information about a first-hop physical resource block PRB and information about a second-hop PRB.

13. The method according to any one of claims 1 to 12, wherein the broadcast message further comprises information about de-modulation reference signal DMRS bundling.

14. The method according to claim 13, wherein the information about the DMRS bundling comprises at least one of the following: information about that the terminal device supports joint channel estimation JCE, a JCE window length, and a frequency hopping time window.

15. A communication apparatus, comprising:
a transceiver unit, configured to receive a broadcast message, wherein the broadcast message comprises information indicating a number x of repetitions, and x is a positive integer; and
a processing unit, configured to send a feedback message for a downlink message in a random access procedure based on the broadcast message, wherein a number y of repetitions for sending the feedback message is determined based on x, and y is a positive integer.

16. A communication apparatus, comprising:
a processing unit, configured to obtain a broadcast message, wherein the broadcast message comprises information indicating a number x of repetitions, x corresponds to a number y of repetitions of a feedback message for a downlink message in a random access procedure, and both x and y are positive integers; and
sending the broadcast message.

17. The apparatus according to claim 15 or 16, wherein the broadcast message is a system information block SIB1 or SIB19.

18. The apparatus according to claim 15 or 16, wherein the broadcast message is a SIB19, and
that the broadcast message comprises information indicating a number x of repetitions comprises: the SIB19 implicitly indicates that x is a preset number z1 of repetitions.

19. The apparatus according to claim 18, wherein z1=2, 4, or 8.

20. The apparatus according to any one of claims 15 to 19, wherein y=x.

21. The apparatus according to any one of claims 15 to 17, wherein x comprises a number of repetitions of a message Msg3 or a number of repetitions of a Msg1.

22. The apparatus according to claim 21, wherein when x is greater than or equal to a first threshold, y is equal to a preset number z2 of repetitions; or when x is less than a first threshold, y=1.

23. The apparatus according to claim 22, wherein the first threshold is equal to 2.

24. The apparatus according to claim 22 or 23, wherein z2=2, 4, or 8.

25. The apparatus according to any one of claims 15 to 24, wherein the broadcast message further comprises information indicating that a terminal device supports inter-slot frequency hopping.

26. The apparatus according to claim 25, wherein the broadcast message further comprises information about a first-hop physical resource block PRB and information about a second-hop PRB.

27. The apparatus according to any one of claims 15 to 26, wherein the broadcast message further comprises information about de-modulation reference signal DMRS bundling.

28. The apparatus according to claim 27, wherein the information about the DMRS bundling comprises at least one of the following: information about that the terminal device supports joint channel estimation JCE, a JCE window length, and a frequency hopping time window.

29. A communication apparatus, comprising a processor and a memory, wherein
the memory is configured to store a computer program; and
the processor is configured to execute the computer program, so that the method according to any one of claims 1 to 14 is performed.

30. A communication apparatus, comprising a logic circuit and an interface, wherein the logic circuit is coupled to the interface; and
the interface is configured to input to-be-processed data, the logic circuit processes the to-be-processed data according to the method according to any one of claims 1 to 14, to obtain processed data, and the interface is configured to output the processed data.

31. A computer-readable storage medium, wherein the computer-readable storage medium is configured to store a computer program, and when the computer program is executed, the method according to any one of claims 1 to 14 is performed.

32. A communication system, comprising a terminal device and a network device, wherein the terminal device is configured to perform the method according to any one of claims 1 and 3 to 14, and the network device is configured to perform the method according to any one of claims 2 to 14.
